(19) Europäisches Patentamt
European Patent Office
Office européen des brevets

(11) **EP 4 373 043 A1**

(12) **EUROPEAN PATENT APPLICATION**
published in accordance with Art. 153(4) EPC

(43) Date of publication:
**22.05.2024 Bulletin 2024/21**

(21) Application number: **22851972.4**

(22) Date of filing: **26.07.2022**

(51) International Patent Classification (IPC):
**H04L 27/26** (2006.01)

(52) Cooperative Patent Classification (CPC):
**H04L 27/26**

(86) International application number:
**PCT/CN2022/107961**

(87) International publication number:
**WO 2023/011258 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021 CN 202110876823
08.10.2021 CN 202111179100**

(71) Applicant: **Huawei Technologies Co., Ltd.
Shenzhen, Guangdong 518129 (CN)**

(72) Inventors:
• **MA, Qianli
Shenzhen, Guangdong 518129 (CN)**
• **HUANG, Huang
Shenzhen, Guangdong 518129 (CN)**
• **GAO, Kuandong
Shenzhen, Guangdong 518129 (CN)**

(74) Representative: **Maiwald GmbH
Engineering
Elisenhof
Elisenstrasse 3
80335 München (DE)**

(54) **SIGNAL TRANSMISSION METHOD AND APPARATUS**

(57) This application provides a signal transmission method and an apparatus, to not only implement multi-user phase noise compensation, but also reduce a PAPR of signals and improve signal transmission performance. The signal transmission method and the apparatus may be used in a communication system. The method includes: A terminal obtains first information, and sends a signal corresponding to a first pilot pattern or a second pilot pattern. The first information indicates the terminal to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

FIG. 16

**Description**

This application claims priorities to Chinese Patent Application No. 202110876823.0, filed with the China National Intellectual Property Administration on July 31, 2021, and entitled "SIGNAL TRANSMISSION METHOD AND APPARATUS", and to Chinese Patent Application No. 202111179100.1, filed with the China National Intellectual Property Administration on October 8, 2021, and entitled "SIGNAL TRANSMISSION METHOD AND APPARATUS", which are incorporated herein by reference in their entireties.

**TECHNICAL FIELD**

This application relates to the communication field, and in particular, to a signal transmission method and an apparatus.

**BACKGROUND**

Currently, multi-user phase noise (phase noise, PHN) measurement, hereinafter referred to as phase noise compensation, is a very important link in a signal transmission process. This may reduce phase noise interference and avoid signal distortion, to improve signal transmission reliability.

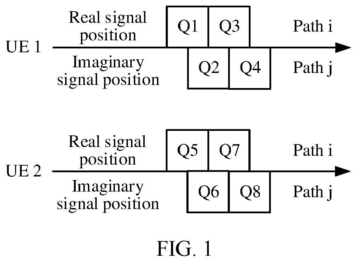

Specifically, for signals used for multi-user phase noise compensation, a design scheme in which real signals are separated from imaginary signals is usually used. For example, as shown in FIG. 1, for signals of a user equipment (user equipment, UE) 1, two reference signals, such as Q1 and Q3, are located at real signal positions and are consecutive, and two redundant signals, such as Q2 and Q4, are located at imaginary signal positions and are consecutive. In this case, an imaginary signal of Q1 is interfered with by Q2, Q4, and a neighboring data signal, for example, INT1. Similarly, an imaginary signal of Q3 is also interfered with by Q2, Q4, and a neighboring data signal, for example, INT3. For signals of a UE 2, two reference signals, such as, Q5 and Q7, are located at real signal locations and are consecutive, and two redundant signals, such as Q6 and Q8, are located at imaginary signal positions and are consecutive. In this case, an imaginary signal of Q5 is interfered with by Q6, Q8, and a neighboring data signal, for example, INT5. Similarly, an imaginary signal of Q7 is also interfered with by Q6, Q8, and a neighboring data signal, for example, INT7. In this case, if Q1=Q3 and INT1=INT3 are set, to be specific, Q1 and Q3 have a same polarity and a same amplitude, and INT1 and INT3 have a same polarity and a same amplitude, and Q5=-Q7 and INT5=-INT7 are set, to be specific, Q5 and Q7 have a same amplitude but opposite polarities, and INT5 and INT7 have a same amplitude but opposite polarities, a base station may determine phase noise in the signals of the UE 1 and the UE 2 by adding and subtracting the signals of the UE 1 and the UE 2, to implement the multi-user phase noise compensation.

However, a condition required for multi-user phase noise compensation, for example, INT5= -INT7, is opposite to a condition required for signal energy minimization, for example, INT5= INT7. To implement the multi-user phase noise compensation, signal energy inevitably increases. As a result, a peak to average power ratio (peak to average power ratio, PAPR) of the signals increases, and signal transmission performance is affected. Therefore, how to reduce the PAPR of the signals and improve the signal transmission performance while implementing the multi-user phase noise compensation needs to be resolved currently.

**SUMMARY**

Embodiments of this application provide a signal transmission method and an apparatus, to not only implement multi-user phase noise compensation, but also reduce a PAPR of signals and improve signal transmission performance.

To achieve the foregoing objectives, the following technical solutions are used in this application.

According to a first aspect, a signal transmission method is provided. The method includes: A terminal set obtains pilot patterns corresponding to the terminal set, to send signals corresponding to the terminal set to a network device. The terminal set includes M terminals, and M is an integer greater than 1. In the M terminals, the pilot pattern of the $i^{th}$ terminal indicates that a first reference signal is located at a first time domain position, and a second reference signal is located at a second time domain position. In the M terminals, the pilot pattern of the $j^{th}$ terminal indicates that a third reference signal is located at the first time domain position, and a fourth reference signal is located at a third time domain position, i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence. A signal of the $i^{th}$ terminal is determined based on the pilot pattern of the $i^{th}$ terminal, and a signal of the $j^{th}$ terminal is determined based on the pilot pattern of the $j^{th}$ terminal.

It may be learned from the method in the first aspect that the value corresponding to the first reference signal in the first precoding sequence is opposite to the value corresponding to the third reference signal in the second precoding sequence. A condition required for multi-user phase noise compensation may be met, so that the multi-user phase noise compensation may be implemented. On this basis, a time domain interval between reference signals is increased. For example, the time domain interval between the first time domain position and the second time domain position is greater than the time domain interval between the first time domain position and the third time domain position, or the time domain interval between the first time domain position and the third time domain position is greater than the time domain interval between the first time domain position and the second time domain position, so that interference caused by the second reference signal to the first reference signal can be reduced, or interference caused by the fourth reference signal to the third reference signal can be reduced. In this way, energy required for modulating the first reference signal or the third reference signal is reduced. While the multi-user phase noise compensation is implemented, a PAPR of the signals is reduced, and signal transmission performance is improved, to achieve a larger coverage area and smaller distortion.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal.

It may be learned that for the $j^{th}$ terminal, two conditions need to be met to determine the multi-user phase noise compensation. Condition 1: The polarity of the third reference signal is opposite to that of the seventh reference signal. Condition 2: The polarity of the third interfering signal of the third reference signal is opposite to that of the fourth interfering signal of the seventh reference signal. In this case, by setting a plurality of, for example, three, reference signals or redundant signals that are used for interfering: the fourth reference signal, the eighth reference signal, and the ninth reference signal, on the basis that Condition 1 and Condition 2 are met, the $j^{th}$ terminal may determine a plurality of energy combinations for the plurality of redundant signals, that is, determine three variables (energy values of the fourth reference signal, the eighth reference signal, and the ninth reference signal) based on two equations (Condition 1 and Condition 2). In this way, the $j^{th}$ terminal may determine an optimal energy solution of the plurality of redundant signals, that is, lowest energy of the plurality of redundant signals, to further reduce the PAPR of the signals, so that the signal transmission performance is further improved.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

It may be learned that for the $j^{th}$ terminal, two conditions need to be met to determine the multi-user phase noise compensation. Condition 1: The polarity of the third reference signal is opposite to that of the seventh reference signal. Condition 2: The polarity of the third interfering signal of the third reference signal is opposite to that of the fourth interfering signal of the seventh reference signal. That is, the $j^{th}$ terminal needs to determine, on the basis that Condition 1 and Condition 2 are met, energy required for modulating two reference signals, for example, the fourth reference signal and the eighth reference signal. In this case, a time domain interval between the third reference signal and the fourth reference signal is increased, so that interference caused by the fourth reference signal to the third reference signal may be reduced, to reduce energy required for modulating the third interfering signal to a polarity opposite to that of the fourth interfering signal. For example, the fourth interfering signal is 1, and the third interfering signal is -1. If the interference caused by the fourth reference signal to the third reference signal is reduced from 0.7 to 0.3, energy required for modulating the third interfering signal to -1 is reduced from |-1.7| to |-1.31. Therefore, the PAPR of the signals is reduced, and the signal transmission performance is improved.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal. In this case, a quantity of variables in a signal modulation process may be reduced, so that the terminal set can obtain a corresponding signal through modulation more quickly, to improve signal modulation efficiency.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

It may be learned that reference signals (or redundant signals) used for interfering and reference signals used for phase noise compensation are separately located at real signal positions and imaginary signal positions. In this case, the redundant signals and the reference signals used for phase noise compensation may be in a partially orthogonal relationship, where the redundant signals and the reference signals are respectively real signals and imaginary signals, to reduce interference between the reference signals. This further reduces the PAPR of the signals, and further improves the signal transmission performance.

In a possible design solution, the pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index.

In another possible design solution, the pilot pattern of the $j^{th}$ terminal may include a first position index, a third position index, a fourth position index, and a fifth position index. The pilot pattern of the $i^{th}$ terminal may include the first position index, the second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

It may be learned that, the time domain sequence numbers of the third position index, the fourth position index, the second position index, the first position index, and the fifth position index are successively consecutive, and the time domain positions indicated by the third position index, the fourth position index, the second position index, the first position index, and the fifth position index are successively adjacent. To be specific, the third time domain position is adjacent to the fourth time domain position, the fourth time domain position is adjacent to the second time domain position, the second time domain position is adjacent to the first time domain position, and the first time domain position is adjacent to the fifth time domain position. In this case, interference caused by the fourth reference signal of the $j^{th}$ terminal to the seventh reference signal is the same as interference caused by the second reference signal of the $i^{th}$ terminal to the fifth reference signal, and is strong enough, so that accuracy of the phase noise compensation can be ensured. In addition, interference caused by the fourth reference signal of the $j^{th}$ terminal to the third reference signal is less than interference caused by the second reference signal of the $i^{th}$ terminal to the first reference signal, so that energy required for signal modulation may be reduced, to reduce the PAPR of the signals. This implements both the accuracy of the phase noise compensation and the low PAPR.

According to a second aspect, a signal transmission method is provided. The method includes: A network device sends pilot patterns corresponding to M terminals, and receives corresponding signals from the M terminals. M is an integer greater than 1. In the M terminals, a pilot pattern of the $i^{th}$ terminal indicates that a first reference signal is located at a first time domain position, and a second reference signal is located at a second time domain position. In the M terminals, a pilot pattern of the $j^{th}$ terminal indicates that a third reference signal is located at the first time domain position, and a fourth reference signal is located at a third time domain position. i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the second reference signal in a second precoding sequence. A signal of the $i^{th}$ terminal is determined based on the pilot pattern of the $i^{th}$ terminal, and a signal of the $j^{th}$ terminal is determined based on the pilot pattern of the $j^{th}$ terminal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

In a possible design solution, the pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index.

In another possible design solution, the pilot pattern of the $j^{th}$ terminal may include a first position index, a third position index, a fourth position index, and a fifth position index. The pilot pattern of the $i^{th}$ terminal may include the first position index, the second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

In addition, for a technical effect of the method in the second aspect, refer to the technical effect of the method in the first aspect. Details are not described herein again.

According to a third aspect, a signal transmission method is provided. The method includes: A network device sends a first pilot pattern of a first terminal, and receives a first signal from the first terminal. A polarity of a tenth reference signal indicated by the first pilot pattern is opposite to that of an eleventh reference signal indicated by the first pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

It may be learned from the method in the third aspect that the polarity of the tenth reference signal is opposite to that of the eleventh reference signal. A condition required for multi-user phase noise compensation may be met, so that the multi-user phase noise compensation may be implemented. On this basis, the polarity of the fifth interfering signal is the same as that of the sixth interfering signal, and a condition required for energy minimization may be met, so that energy required for modulating the tenth reference signal and the eleventh reference signal is the smallest. In this case, while the multi-user phase noise compensation is implemented, a PAPR of the signals is reduced, and signal transmission performance is improved.

In a possible design solution, an amplitude of the tenth reference signal may be the same as that of the eleventh reference signal.

In a possible design solution, an amplitude of the fifth interfering signal may be the same as that of the sixth interfering signal.

It should be understood that if the amplitudes of the signals are set to be the same, a quantity of variables in a signal modulation process may be reduced, so that the first terminal can obtain a corresponding signal through modulation more quickly, to improve signal modulation efficiency.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions. In this case, compared with a solution in which the tenth reference signal and the eleventh reference signal are respectively located at a real signal position and an imaginary signal position, the tenth reference signal and the eleventh reference signal are both located at the real signal positions or are both located at the imaginary signal positions, so that real-imaginary conversion does not need to be performed in a signal modulation procedure, to simplify the modulation procedure. In this way, the first terminal can obtain a corresponding signal through modulation more quickly, to improve signal modulation efficiency.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions. That is, reference signals (or redundant signals) used for interfering, for example, the twelfth reference signal and the thirteenth reference signal, and reference signals used for phase noise compensation, for example, the tenth reference signal and the eleventh reference signal, are respectively located at real signal positions and imaginary signal positions. In this case, the redundant signals and the reference signals used for phase noise compensation may be in a partially orthogonal relationship, where the redundant signals and the reference signals are respectively real signals and imaginary signals, to reduce interference between the reference signals. This further reduces the PAPR of the signals, and further improves the signal transmission performance.

Optionally, the first pilot pattern may include a sixth position index and a seventh position index, the sixth time domain position indicates the sixth time domain position, and the seventh time domain position indicates the seventh time domain position.

Further, the first pilot pattern may further include an eighth position index and a ninth position index, the eighth position index indicates the eighth time domain position, and the ninth position index indicates the ninth time domain position.

Time domain sequence numbers of the sixth position index and the eighth position index are consecutive, time domain sequence numbers of the eighth position index and the seventh position index are consecutive, and time domain sequence numbers of the seventh position index and the ninth position index are consecutive. To be specific, the time domain sequence numbers of the sixth position index, the eighth position index, the seventh position index, and the ninth position index are successively consecutive, and the time domain positions indicated by the sixth position index, the eighth position index, the seventh position index, and the ninth position index are successively adjacent. To be specific, the time domain position of the twelfth reference signal is adjacent to the time domain positions of the tenth reference signal and the eleventh reference signal, and the time domain position of the thirteenth reference signal is adjacent to the time domain position of the eleventh reference signal, that is, the time domain position of the redundant signal is adjacent to the time domain position of the interfered reference signal. In this case, it may be ensured that interference caused by the redundant signal to the interfered reference signal is strong enough, to ensure accuracy of the phase noise compensation.

According to a fourth aspect, a signal transmission method is provided. The method includes: A first terminal obtains a first pilot pattern of the first terminal, and sends a first signal to a network device. A polarity of a tenth reference signal indicated by the first pilot pattern is opposite to that of an eleventh reference signal indicated by a third pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

In a possible design solution, an amplitude of the tenth reference signal may be the same as that of the eleventh reference signal.

In a possible design solution, an amplitude of the fifth interfering signal may be the same as that of the sixth interfering signal.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions.

Optionally, the first pilot pattern may include a sixth position index and a seventh position index, the sixth time domain position indicates the sixth time domain position, and the seventh time domain position indicates the seventh time domain position.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions.

Further, the first pilot pattern includes an eighth position index and a ninth position index, the eighth position index indicates the eighth time domain position, and the ninth position index indicates the ninth time domain position.

Further, time domain sequence numbers of the sixth position index and the eighth position index are consecutive, time domain sequence numbers of the eighth position index and the seventh position index are consecutive, and time domain sequence numbers of the seventh position index and the ninth position index are consecutive.

In addition, for a technical effect of the method in the fourth aspect, refer to the technical effect of the method in the third aspect. Details are not described herein again.

According to a fifth aspect, a signal transmission apparatus is provided. The apparatus includes a receiving module and a sending module. The receiving module is configured to obtain pilot patterns corresponding to the signal transmission apparatus. The sending module is configured to send, to a network device, signals corresponding to a terminal set.

The signal transmission apparatus in the fifth aspect includes M terminals, where M is an integer greater than 1. In the M terminals, a pilot pattern of the $i^{th}$ terminal indicates that a first reference signal is located at a first time domain position, and a second reference signal is located at a second time domain position. In the M terminals, a pilot pattern of the $j^{th}$ terminal indicates that a third reference signal is located at the first time domain position, and a fourth reference signal is located at a third time domain position, i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the second reference signal in a second precoding sequence. A signal of the $i^{th}$ terminal is determined based on the pilot pattern of the $i^{th}$ terminal, and a signal of the $j^{th}$ terminal is determined based on the pilot pattern of the $j^{th}$ terminal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

In a possible design solution, the pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index.

In another possible design solution, the pilot pattern of the $j^{th}$ terminal may include a first position index, a third position index, a fourth position index, and a fifth position index. The pilot pattern of the $i^{th}$ terminal may include the first position index, the second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module and the receiving module may alternatively be integrated into one module, for example, a transceiver module. The transceiver module is configured to implement a sending function and a receiving function of the apparatus in the fifth aspect.

Optionally, in the fifth aspect, the apparatus may further include a processing module. The processing module is configured to implement a processing function of the apparatus.

Optionally, the apparatus in the fifth aspect may further include a storage module. The storage module stores a program or instructions. When the processing module executes the program or the instructions, the apparatus may be enabled to perform the method according to the first aspect.

It should be noted that, the apparatus in the fifth aspect may be a terminal set, for example, a terminal set including the M terminals, may be a chip (system) or another part or component that may be disposed in the terminal set, or may be an apparatus including the terminal set. This is not limited in this application.

In addition, for a technical effect of the apparatus in the fifth aspect, refer to the technical effect of the method in the first aspect. Details are not described herein again.

According to a sixth aspect, a signal transmission apparatus is provided. The apparatus includes a sending module and a receiving module. The sending module is configured to send pilot patterns corresponding to M terminals. The receiving module is configured to receive corresponding signals from the M terminals.

M is an integer greater than 1. In the M terminals, a pilot pattern of the $i^{th}$ terminal indicates that a first reference signal is located at a first time domain position, and a second reference signal is located at a second time domain position. In the M terminals, a pilot pattern of the $j^{th}$ terminal indicates that a third reference signal is located at the first time domain position, and a fourth reference signal is located at a third time domain position, i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the second reference signal in a second precoding sequence. A signal of the $i^{th}$ terminal is determined based on the pilot pattern of the $i^{th}$ terminal, and a signal of the $j^{th}$ terminal is determined based on the pilot pattern of the $j^{th}$ terminal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal.

The fourth interfering signal may include interfering signals generated by the fourth reference signal, the eighth reference signal, and the ninth reference signal for the seventh reference signal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

In a possible design solution, the pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index.

In another possible design solution, the pilot pattern of the $j^{th}$ terminal may include a first position index, a third position index, a fourth position index, and a fifth position index. The pilot pattern of the $i^{th}$ terminal may include the first position index, the second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module and the receiving module may alternatively be integrated into one module, for example, a transceiver module. The transceiver module is configured to implement a sending function and a receiving function of the apparatus in the sixth aspect.

Optionally, in a sixth aspect, the apparatus may further include a processing module. The processing module is configured to implement a processing function of the apparatus.

Optionally, the apparatus in the sixth aspect may further include a storage module. The storage module stores a program or instructions. When the processing module executes the program or the instructions, the apparatus may be enabled to perform the method according to the second aspect.

It should be noted that, the apparatus in the sixth aspect may be a network device, may be a chip (system) or another part or component that may be disposed in the network device, or may be an apparatus including the network device. This is not limited in this application.

In addition, for a technical effect of the apparatus in the sixth aspect, refer to the technical effect of the method in the first aspect. Details are not described herein again.

According to a seventh aspect, a signal transmission apparatus is provided. The apparatus includes a receiving module and a sending module. The sending module is configured to send a first pilot pattern of a first terminal. The receiving module is configured to receive a first signal from the first terminal. A polarity of a tenth reference signal indicated by the first pilot pattern is opposite to that of an eleventh reference signal indicated by a third pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

In a possible design solution, an amplitude of the tenth reference signal may be the same as that of the eleventh reference signal.

In a possible design solution, an amplitude of the fifth interfering signal may be the same as that of the sixth interfering signal.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions.

Optionally, the first pilot pattern may include a sixth position index and a seventh position index, the sixth time domain position indicates the sixth time domain position, and the seventh time domain position indicates the seventh time domain position.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions.

Further, the first pilot pattern includes an eighth position index and a ninth position index, the eighth position index indicates the eighth time domain position, and the ninth position index indicates the ninth time domain position.

Further, time domain sequence numbers of the sixth position index and the eighth position index are consecutive, time domain sequence numbers of the eighth position index and the seventh position index are consecutive, and time domain sequence numbers of the seventh position index and the ninth position index are consecutive.

Optionally, the sending module and the receiving module may alternatively be integrated into one module, for example, a transceiver module. The transceiver module is configured to implement a sending function and a receiving function of the apparatus in the seventh aspect.

Optionally, in the seventh aspect, the apparatus may further include a processing module. The processing module is configured to implement a processing function of the apparatus.

Optionally, the apparatus in the seventh aspect may further include a storage module. The storage module stores a program or instructions. When the processing module executes the program or the instructions, the apparatus may be enabled to perform the method according to the third aspect.

It should be noted that, the apparatus in the seventh aspect may be a network device, may be a chip (system) or another part or component that may be disposed in the network device, or may be an apparatus including the network device. This is not limited in this application.

In addition, for a technical effect of the apparatus in the seventh aspect, refer to the technical effect of the method in the third aspect. Details are not described herein again.

According to an eighth aspect, a signal transmission apparatus is provided. The apparatus includes a receiving module and a sending module. The receiving module is configured to obtain a first pilot pattern of the signal transmission apparatus. The sending module is configured to send a first signal to a network device. A polarity of a tenth reference signal indicated by the first pilot pattern is opposite to that of an eleventh reference signal indicated by a third pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

In a possible design solution, an amplitude of the tenth reference signal may be the same as that of the eleventh reference signal.

In a possible design solution, an amplitude of the fifth interfering signal may be the same as that of the sixth interfering signal.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions.

Optionally, the first pilot pattern may include a sixth position index and a seventh position index, the sixth time domain position indicates the sixth time domain position, and the seventh time domain position indicates the seventh time domain position.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions.

Further, the first pilot pattern includes an eighth position index and a ninth position index, the eighth position index indicates the eighth time domain position, and the ninth position index indicates the ninth time domain position.

Further, time domain sequence numbers of the sixth position index and the eighth position index are consecutive, time domain sequence numbers of the eighth position index and the seventh position index are consecutive, and time domain sequence numbers of the seventh position index and the ninth position index are consecutive.

Optionally, the sending module and the receiving module may alternatively be integrated into one module, for example, a transceiver module. The transceiver module is configured to implement a sending function and a receiving function of the apparatus in the eighth aspect.

Optionally, in the eighth aspect, the apparatus may further include a processing module. The processing module is configured to implement a processing function of the apparatus.

Optionally, the apparatus in the eighth aspect may further include a storage module. The storage module stores a program or instructions. When the processing module executes the program or the instructions, the apparatus may be enabled to perform the method according to the fourth aspect.

It should be noted that, the apparatus in the eighth aspect may be a terminal device, for example, a first terminal, may be a chip (system) or another part or component that may be disposed in the terminal device, or may be an apparatus including the terminal device. This is not limited in this application.

In addition, for a technical effect of the apparatus in the eighth aspect, refer to the technical effect of the method in the third aspect. Details are not described herein again.

According to a ninth aspect, a signal transmission method is provided. The method includes: A terminal obtains first information, and sends a signal corresponding to a first pilot pattern or a second pilot pattern. The first information indicates the terminal to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

It may be learned from the method in the ninth aspect that, because there are a plurality of pilot patterns, for example, including the first pilot pattern or the second pilot pattern, in a multi-user scenario, the terminal may select to use a corresponding pilot pattern to send a signal. For example, when a terminal has selected the first pilot pattern and the first precoding sequence to send a signal, another terminal may select the second pilot pattern and the second precoding sequence to send a signal. In this case, because the value corresponding to the first reference signal in the first precoding sequence is opposite to the value corresponding to the third reference signal in the second precoding sequence, a condition required for multi-user phase noise compensation may be met, so that the multi-user phase noise compensation may be implemented. In addition, because time domain intervals between reference signals in the first pilot pattern or the second pilot pattern are different, for example, the time domain interval between the first time domain position and the second time domain position is greater than the time domain interval between the first time domain position and the third time domain position, or the time domain interval between the first time domain position and the third time domain position is greater than the time domain interval between the first time domain position and the second time domain position, so that interference caused by the second reference signal to the first reference signal can be reduced, or interference caused by the fourth reference signal to the third reference signal can be reduced. In this way, energy required for modulating the first reference signal or the third reference signal is reduced. While the multi-user phase noise compensation is implemented, a PAPR of the signals is reduced, and signal transmission performance is improved, to achieve a larger coverage area and smaller distortion.

In a possible design solution, the first information includes the first precoding sequence or the second precoding sequence. The first precoding sequence corresponds to the first pilot pattern, and the second precoding sequence corresponds to the second pilot pattern, so that the terminal may determine, based on a precoding sequence in the first information, a pilot pattern used to send a signal. No additional signaling indication is required. Therefore, signaling overheads may be reduced, and communication efficiency may be improved.

Optionally, before the terminal obtains the first information, the method in the ninth aspect may further include: The terminal obtains second information. The second information includes the correspondence between the first precoding sequence and the first pilot pattern and/or the correspondence between the second precoding sequence and the second pilot pattern. In this way, when receiving the first information, the terminal can accurately determine, based on the correspondences between the precoding sequences and the pilot patterns, a pilot pattern that the terminal needs to use.

In a possible design solution, the first information may indicate a first mode or a second mode. The first mode may indicate the terminal to use the first pilot pattern, and the second mode may indicate the terminal to use the second pilot pattern. In this case, the terminal may determine, based on a mode indicated in the first information, a pilot pattern used to send a signal. No additional signaling indication is required. Therefore, signaling overheads may be reduced, and communication efficiency may be improved.

Optionally, before the terminal obtains the first information, the method in the ninth aspect may further include: The terminal obtains second information. The second information includes a correspondence between the first mode and the first pilot pattern and/or a correspondence between the second mode and the second pilot pattern. In this way, when receiving the first information, the terminal can accurately determine, based on the correspondences between the modes and the pilot patterns, a pilot pattern that the terminal needs to use.

In a possible design solution, the first information may further include the first pilot pattern and/or the second pilot pattern, to implement signaling multiplexing and improve communication efficiency.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

For other technical effects of the method in the ninth aspect, refer to the technical effects of the method in the first aspect. Details are not described herein again.

According to a tenth aspect, a signal transmission method is provided. The method includes: A network device sends first information, and receives a signal corresponding to a first pilot pattern or a second pilot pattern. The first information indicates a terminal to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

In a possible design solution, the first information may include the first precoding sequence or the second precoding sequence. The first precoding sequence corresponds to the first pilot pattern, and the second precoding sequence corresponds to the second pilot pattern.

Optionally, before the network device sends the first information, the method in the tenth aspect may further include: The network device sends second information. The second information includes the correspondence between the first precoding sequence and the first pilot pattern and/or the correspondence between the second precoding sequence and the second pilot pattern.

In a possible design solution, the first information may indicate a first mode or a second mode. The first mode may indicate the terminal to use the first pilot pattern, and the second mode may indicate the terminal to use the second pilot pattern.

Optionally, before the network device sends the first information, the method in the tenth aspect may further include: The network device sends second information. The second information includes a correspondence between the first mode and the first pilot pattern and/or a correspondence between the second mode and the second pilot pattern.

In a possible design solution, the first information may further include the first pilot pattern and/or the second pilot pattern.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position, and the second time domain position and the third time domain position are imaginary signal positions. Alternatively, the first time domain position is an imaginary signal position, and the second time domain position and the third time domain position are real signal positions. The fourth time domain position is a real signal position, and the fifth time domain position is an imaginary signal position. Alternatively, the fourth time domain position is an imaginary signal position, and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

In addition, for a technical effect of the method in the tenth aspect, refer to the technical effect of the method in the ninth aspect. Details are not described herein again.

According to an eleventh aspect, a signal transmission apparatus is provided. The apparatus includes a receiving module and a sending module. The receiving module is configured to obtain first information. The sending module is configured to send a signal corresponding to a first pilot pattern or a second pilot pattern. The first information indicates the apparatus in the eleventh aspect to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

In a possible design solution, the first information includes the first precoding sequence or the second precoding sequence. The first precoding sequence corresponds to the first pilot pattern, and the second precoding sequence corresponds to the second pilot pattern.

Optionally, the receiving module is further configured to obtain second information before obtaining the first information. The second information includes the correspondence between the first precoding sequence and the first pilot pattern and/or the correspondence between the second precoding sequence and the second pilot pattern.

In a possible design solution, the first information may indicate a first mode or a second mode. The first mode may indicate the apparatus in the eleventh aspect to use the first pilot pattern, and the second mode may indicate the apparatus in the eleventh aspect to use the second pilot pattern.

Optionally, the receiving module is further configured to obtain second information before obtaining the first information. The second information includes a correspondence between the first mode and the first pilot pattern and/or a correspondence between the second mode and the second pilot pattern.

In a possible design solution, the first information may further include the first pilot pattern and/or the second pilot pattern.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module and the receiving module may alternatively be integrated into one module, for example, a transceiver module. The transceiver module is configured to implement a sending function and a receiving function of the apparatus in the eleventh aspect.

Optionally, in the eleventh aspect, the apparatus may further include a processing module. The processing module is configured to implement a processing function of the apparatus.

Optionally, the apparatus in the eleventh aspect may further include a storage module. The storage module stores a program or instructions. When the processing module executes the program or the instructions, the apparatus may be enabled to perform the method according to the ninth aspect.

It should be noted that, the apparatus in the eleventh aspect may be a terminal, may be a chip (system) or another part or component that may be disposed in the terminal, or may be an apparatus including the terminal. This is not limited in this application.

In addition, for a technical effect of the apparatus in the eleventh aspect, refer to the technical effect of the method in the ninth aspect. Details are not described herein again.

According to a twelfth aspect, a signal transmission apparatus is provided. The apparatus includes a receiving module and a sending module. The sending module is configured to send first information. The receiving module is configured to receive a signal corresponding to a first pilot pattern or a second pilot pattern. The first information indicates a terminal to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

In a possible design solution, the first information may include the first precoding sequence or the second precoding sequence. The first precoding sequence corresponds to the first pilot pattern, and the second precoding sequence corresponds to the second pilot pattern.

Optionally, the sending module is further configured to send second information before sending the first information. The second information includes the correspondence between the first precoding sequence and the first pilot pattern and/or the correspondence between the second precoding sequence and the second pilot pattern.

In a possible design solution, the first information may indicate a first mode or a second mode. The first mode may indicate the terminal to use the first pilot pattern, and the second mode may indicate the terminal to use the second pilot pattern.

Optionally, the sending module is further configured to send second information before sending the first information. The second information includes a correspondence between the first mode and the first pilot pattern and/or a correspondence between the second mode and the second pilot pattern.

In a possible design solution, the first information may further include the first pilot pattern and/or the second pilot pattern.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position, and the second time domain position and the third time domain position are imaginary signal positions. Alternatively, the first time domain position is an imaginary signal position, and the second time domain position and the third time domain position are real signal positions. The fourth time domain position is a real signal position, and the fifth time domain position is an imaginary signal position. Alternatively, the fourth time domain position is an imaginary signal position, and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module and the receiving module may alternatively be integrated into one module, for example, a transceiver module. The transceiver module is configured to implement a sending function and a receiving function of the apparatus in the twelfth aspect.

Optionally, in the twelfth aspect, the apparatus may further include a processing module. The processing module is configured to implement a processing function of the apparatus.

Optionally, the apparatus in the twelfth aspect may further include a storage module. The storage module stores a program or instructions. When the processing module executes the program or the instructions, the apparatus may be enabled to perform the method according to the tenth aspect.

It should be noted that, the apparatus in the twelfth aspect may be a network device, may be a chip (system) or another part or component that may be disposed in the network device, or may be an apparatus including the network device. This is not limited in this application.

In addition, for a technical effect of the apparatus in the twelfth aspect, refer to the technical effect of the method in the tenth aspect. Details are not described herein again.

According to a thirteenth aspect, a signal transmission apparatus is provided. The apparatus includes a processor. The processor is configured to perform the method according to any one of the first aspect to the fourth aspect, the ninth aspect, and the tenth aspect.

In a possible design solution, in the thirteenth aspect, the apparatus may further include a transceiver. The transceiver may be a transceiver circuit or an interface circuit. The transceiver may be used by the apparatus to communicate with another apparatus.

In a possible design solution, in the thirteenth aspect, the apparatus may further include a memory. The memory may be integrated with the processor, or may be disposed separately. The memory may be configured to store a computer program and/or data related to the method according to any one of the first aspect to the fourth aspect, the ninth aspect, and the tenth aspect.

In this application, the apparatus in the thirteenth aspect may be the terminal set in the first aspect, the network device in the second aspect or the third aspect, the terminal device in the fourth aspect, for example, a first terminal, the terminal in the ninth aspect, the network device in the tenth aspect, a chip (system) or another part or component that may be disposed in the terminal device, the terminal set, or the network device, or an apparatus including the terminal device, the terminal set, or the network device.

In addition, for a technical effect of the apparatus in the thirteenth aspect, refer to the technical effect of the method according to any one of the first aspect to the fourth aspect, the ninth aspect, and the tenth aspect. Details are not described herein again.

According to a fourteenth aspect, a signal transmission apparatus is provided. The apparatus includes a processor and a memory. The memory is configured to store computer instructions. When the processor executes the instructions, the apparatus is enabled to perform the method according to any one of the first aspect to the fourth aspect, the ninth aspect, and the tenth aspect.

In a possible design solution, in the fourteenth aspect, the apparatus may further include a transceiver. The transceiver may be a transceiver circuit or an interface circuit. The transceiver may be used by the apparatus to communicate with another apparatus.

In this application, the apparatus in the fourteenth aspect may be the terminal set in the first aspect, the network device in the second aspect or the third aspect, the terminal device in the fourth aspect, for example, a first terminal, the terminal in the ninth aspect, the network device in the tenth aspect, a chip (system) or another part or component that may be disposed in the terminal device, the terminal set, or the network device, or an apparatus including the terminal device, the terminal set, or the network device.

In addition, for a technical effect of the apparatus in the fourteenth aspect, refer to the technical effect of the method according to any one of the first aspect to the fourth aspect, the ninth aspect, and the tenth aspect. Details are not described herein again.

According to a fifteenth aspect, a signal transmission apparatus is provided. The apparatus includes a logic circuit and an input/output interface. The input/output interface is configured to receive code instructions and transmit the code instructions to the logic circuit. The logic circuit is configured to run the code instructions, to perform the method according to any one of the first aspect to the fourth aspect, the ninth aspect, and the tenth aspect.

In this application, the apparatus in the fifteenth aspect may be the terminal set in the first aspect, the network device in the second aspect or the third aspect, the terminal device in the fourth aspect, for example, a first terminal, the terminal in the ninth aspect, the network device in the tenth aspect, a chip (system) or another part or component that may be disposed in the terminal device, the terminal set, or the network device, or an apparatus including the terminal device, the terminal set, or the network device.

In addition, for a technical effect of the apparatus in the fifteenth aspect, refer to the technical effect of the method according to any one of the first aspect to the fourth aspect, the ninth aspect, and the tenth aspect. Details are not described herein again.

According to a sixteenth aspect, a signal transmission apparatus is provided. The apparatus includes a processor and a transceiver. The transceiver is used by the signal transmission apparatus to exchange information with another apparatus. The processor executes program instructions, to perform the method according to any one of the first aspect to the fourth aspect, the ninth aspect, and the tenth aspect.

In a possible design solution, in the sixteenth aspect, the apparatus may further include a memory. The memory may be integrated with the processor, or may be disposed separately. The memory may be configured to store a computer program and/or data related to the method according to any one of the first aspect to the fourth aspect, the ninth aspect, and the tenth aspect.

In this application, the apparatus in the sixteenth aspect may be the terminal set in the first aspect, the network device in the second aspect or the third aspect, the terminal device in the fourth aspect, for example, a first terminal, the terminal in the ninth aspect, the network device in the tenth aspect, a chip (system) or another part or component that may be disposed in the terminal device, the terminal set, or the network device, or an apparatus including the terminal device, the terminal set, or the network device.

In addition, for a technical effect of the apparatus in the sixteenth aspect, refer to the technical effect of the method according to any one of the first aspect to the fourth aspect, the ninth aspect, and the tenth aspect. Details are not described herein again.

According to a seventeenth aspect, a communication system is provided. The communication system includes one or more network devices and one or more terminals, for example, a terminal (namely, a first terminal) or a terminal set. The terminal set is configured to perform the method according to the first aspect, or the terminal is configured to perform the method according to the fourth aspect or the ninth aspect. The network device is configured to perform the method according to the first aspect, the second aspect, or the tenth aspect.

According to an eighteenth aspect, a computer-readable storage medium is provided. The computer-readable storage medium includes a computer program or instructions. When the computer program or the instructions are run on a computer, the computer is enabled to perform the method according to any one of the first aspect to the fourth aspect, the ninth aspect, and the tenth aspect.

According to a nineteenth aspect, a computer program product is provided. The computer program product includes a computer program or instructions. When the computer program or the instructions are run on a computer, the computer is enabled to perform the method according to any one of the first aspect to the fourth aspect, the ninth aspect, and the tenth aspect.

## BRIEF DESCRIPTION OF DRAWINGS

FIG. 1 is a schematic diagram of existing pilot patterns;
FIG. 2 is a schematic diagram 1 of grouping of PTRSs and data;
FIG. 3 is a schematic diagram 2 of grouping of PTRSs and data;
FIG. 4 is a schematic diagram of waveforms of multi-carrier signals;
FIG. 5 is a schematic flowchart of implementing SC-OQAM in time domain;
FIG. 6 is a schematic diagram of waveforms of SC-OQAM;
FIG. 7 is a schematic flowchart of implementing SC-OQAM in frequency domain;
FIG. 8 is a schematic flowchart of frequency domain filtering;
FIG. 9 is a schematic diagram 1 of reference signal positions in SC-OQAM;
FIG. 10 is a schematic diagram 2 of reference signal positions in SC-OQAM;
FIG. 11 is a schematic diagram 3 of reference signal positions in SC-OQAM;
FIG. 12 is a schematic diagram 4 of reference signal positions in SC-OQAM;
FIG. 13 is a schematic diagram of reference signal positions of a UE 1;
FIG. 14 is a schematic diagram of reference signal positions of a UE 2;
FIG. 15 is a schematic diagram of an architecture of a communication system according to an embodiment of this application;
FIG. 16 is a schematic diagram 1 of a signal transmission method according to an embodiment of this application;
FIG. 17 is a schematic diagram 1 of reference signal positions of a UE 1 and a UE 2;
FIG. 18 is a schematic diagram 2 of reference signal positions of a UE 1 and a UE 2;
FIG. 19 is a schematic diagram 2 of a signal transmission method according to an embodiment of this application;
FIG. 20 is a schematic diagram 3 of reference signal positions of a UE 1 and a UE 2;
FIG. 21 is a schematic diagram 3 of a signal transmission method according to an embodiment of this application;
FIG. 22 is a schematic diagram 1 of a structure of a signal transmission apparatus according to an embodiment of this application;
FIG. 23 is a schematic diagram 2 of a structure of a signal transmission apparatus according to an embodiment of this application; and
FIG. 24 is a schematic diagram 3 of a structure of a signal transmission apparatus according to an embodiment of this application.

## DESCRIPTION OF EMBODIMENTS

The following describes technical terms in embodiments of this application.

1. Phase noise

The phase noise causes a signal to generate a random phase offset in time domain, and the phase offset may be further observed in frequency domain. A signal generated by an oscillator is used as an example. If the signal is not interfered with by the phase noise, entire power of the oscillator should be concentrated at a frequency fo or a reference frequency. However, if the signal is interfered with by the phase noise, a part of the power of the oscillator is spread from the reference frequency to an adjacent frequency, generating a sideband (sideband). Currently, all transmitted signals are obtained through frequency multiplication of low-frequency signals. In this case, a value of the phase noise is positively related to a value of a frequency multiplication factor. A larger frequency multiplication factor indicates a higher frequency of a signal and a larger phase noise. That is, a higher frequency domain of the signal indicates stronger phase noise interference to the signal. Therefore, for a high-frequency signal, for example, a signal in a frequency band such as 28 gigahertz (GHz), 39 GHz, 60 GHz, or 73 GHz, phase noise compensation needs to be accurately performed, to avoid signal distortion as much as possible.

2. Discrete Fourier transform-spread-orthogonal frequency division multiplexing (discrete fourier transform, DFT)-(spread, s)-(orthogonal frequency division multiplexing, OFDM)

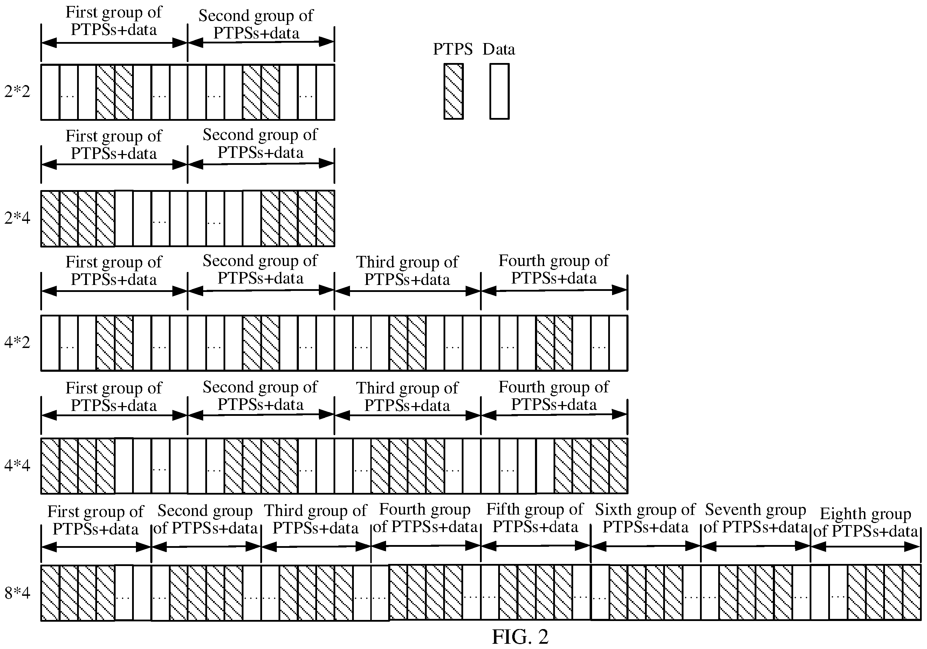

In a DFT-s-OFDM technology, reference signals or pilots, for example, phase tracking reference signals (phase tracking reference signals, PTRSs), are used to implement phase noise compensation by analyzing phase noise interference to the reference signals. In this way, signal demodulation performance in a phase noise condition is improved. Specifically, a transmit end, for example, a UE, may insert reference signals into each group of data signals. For example, FIG. 2 is a schematic diagram of time sequences of signals corresponding to DFT-s-OFDM. As shown in FIG. 2, there may be a plurality of groups of data signals, for example, two groups, four groups, or eight groups, and a corresponding quantity of reference signals, for example, two or four reference signals, may be inserted into two ends or a middle part of each group of data. Then, the UE may send the reference signals and the data signals to a receive end, for example, a base station, so that the base station receives the reference signals and the data signals that are interfered with by phase noise, and determines phase noise of each group of data signals based on the reference signals that are interfered with by the phase noise. Therefore, phase noise compensation is performed on each group of data signals that are interfered with by the phase noise, to eliminate the interference caused by the phase noise to the data signals.

Further, in a multi-user scenario, a plurality of UEs simultaneously send signals (reference signals and data signals) to the base station. To implement phase noise compensation for the signals of each UE, the UE needs to modulate the signals by using precoding sequences (sequences including 1 and -1), so that signals that are of the plurality of UEs and that are received by the base station are decoupled, to implement the phase noise compensation for the signals of each UE.

For ease of understanding, two UEs as used an example below to specifically describe the phase noise compensation in the multi-user scenario.

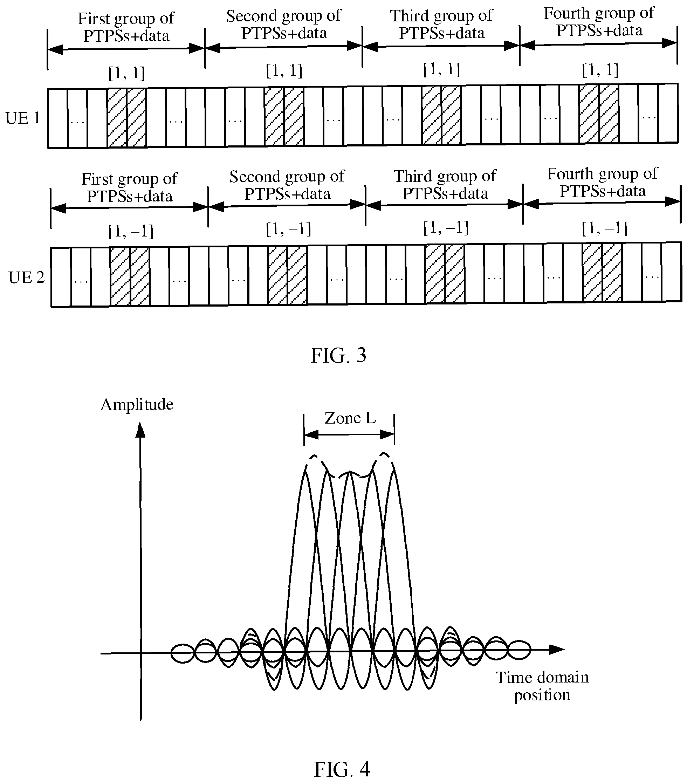

FIG. 3 is a schematic diagram of time sequences of signals in the multi-user scenario. As shown in FIG. 3, two reference signals may be inserted into each group of data signals of a UE 1 and a UE 2, and the two reference signals are located at a same time domain position. If the UE 1 modulates the reference signals by using a precoding sequence [1, 1], the UE 2 modulates the reference signals by using a precoding sequence [1, -1], and UE 1 and UE 2 simultaneously send the reference signals to the base station, signals received by the base station may be represented by the formulas 1 and 2:

$$Y1=(PTRS\ UE\ 1)*\exp(1i*\Theta1)+(PTRS\ UE\ 2)*\exp(1i*\Theta2) \quad (1);$$

and

$$Y2=(PTRS\ UE\ 1)*\exp(1i*\Theta1)-(PTRS\ UE\ 2)*\exp(1i*\Theta2) \quad (2).$$

Y1 is a signal received by the base station at a time domain position of one reference signal, Y2 is a signal received by the base station at a time domain position of another reference signal, PTRS UE 1 is the reference signal of the UE 1, PTRS UE 2 is the reference signal of the UE 2, $\exp(1i*\Theta1)$ is phase noise of the UE 1, and $\exp(1i*\Theta2)$ is phase noise of the UE 2. In this case, the base station may separately determine the phase noise $\exp(1i*\Theta1)$ and the phase noise $\exp(1i*\Theta2)$ by using Y1+Y2 and Y1-Y2, to implement the phase noise compensation: the multi-user phase noise compensation, for the UE 1 and the UE 2.

It may be learned that, to implement the multi-user phase noise compensation, at least two reference signals are required. In addition, if a quantity of users is not limited to 2, a quantity and a length of precoding sequences may be correspondingly increased, to implement the phase noise compensation for more users. For example, if a quantity of UEs is 4, precoding sequences corresponding to the four UEs may be: [1, 1, 1, 1], [1, -1, 1, -1], [1, 1, -1, -1], and [1, -1, -1, 1]. In addition, if the quantity of UEs is 8, 16, or the like, these cases may be deduced by analogy.

3. PAPR

The PAPR is a ratio of maximum transient power to average power, and is also referred to as a peak-to-average power ratio.

Specifically, because a radio signal is a sine wave whose amplitude consecutively changes in time domain, the amplitudes of the signal in each periodicity are different. Therefore, average power and peak power in each periodicity are also different. In this case, a ratio of the average power to the peak power in each periodicity is not suitable for measuring the PAPR. That is, to measure the PAPR, observation needs to be performed for a longer period of time, for example, a plurality of consecutive periodicities. During this period of time, the peak power may be the maximum transient power that occurs with a probability, for example, a probability of 0.01% or a probability of $10^{-4}$, and the ratio of the maximum transient power to the average power is the PAPR.

Further, for multi-carrier signals of OFDM, the PAPR is usually generated through superposition of the multi-carrier signals. For example, FIG. 4 is a schematic diagram of waveforms of multi-carrier signals. As shown in FIG. 4, in the multi-carrier signals of OFDM, a waveform of a carrier signal may be a sine function. To be specific, a wave peak is located in a middle part, and tailings are formed on left and right sides of the wave peak. In this case, peaks of a plurality of consecutive carrier signals may be superposed to obtain a peak value area, for example, an area L. In this case, maximum transient power generated in the peak value area is usually very large, resulting in a large PAPR of a system.

It may be understood that for wireless communication, if a signal needs to be sent to a remote place, a power amplifier needs to perform power amplification on the signal. Limited by technologies and costs, the power amplifier can perform linear amplification on the signal within only a power zone. If the linear amplification is performed beyond the power zone, the signal is distorted. As a result, a receive end cannot correctly parse the signal. On this basis, if a PAPR of the signal is excessively large, an amplification multiple of the signal in the power zone is reduced, or amplification efficiency is reduced. As a result, a coverage area of the signal is reduced. Therefore, to meet a coverage requirement of the signal, the PAPR of the signal needs to be reduced as much as possible.

4. Single-carrier offset quadrature amplitude modulation (single-carrier offset quadrature amplitude modulation, SC-OQAM)

A signal has a path loss or a path loss in a wireless transmission process, and a path loss of a high-frequency signal is particularly serious. To improve received quality of the high-frequency signal, increasing transmit power of the high-frequency signal is a main solution to combat the path loss. Therefore, the high-frequency signal may be modulated by using an SC-OQAM technology, to obtain a low PAPR, so that the transmit power of the high-frequency signal is increased.

Specifically, there are usually two implementations of SC-OQAM: an implementation in time domain and an implementation in frequency domain, which are separately described below.

Implementation in time domain:

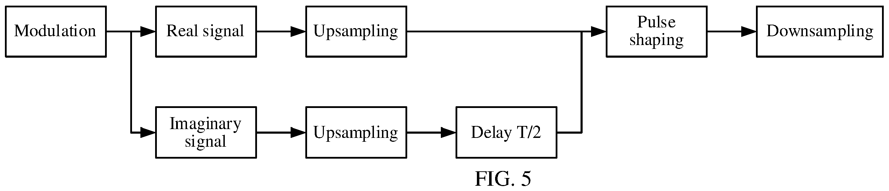

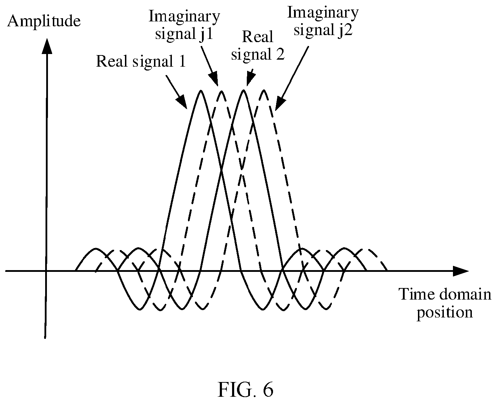

A UE is used as an example. FIG. 5 is a schematic flowchart of the implementation in time domain. As shown in FIG. 5, the UE may first modulate to-be-sent data signals, for example, an encoded 01 string, into discrete time domain signals, for example, discrete real signals and discrete imaginary signals. Then, the UE may perform upsampling or interpolation processing on the discrete real signals and the discrete imaginary signals, to obtain more consecutive signals in time domain, for example, upsampled real signals and upsampled imaginary signals. Then, the UE may select to delay one of the signals by T/2, for example, delay the upsampled imaginary signals by T/2, to obtain real signals and imaginary signals that are in a partial orthogonal relationship, or quadrature amplitude modulation (quadrature amplitude modulation, QAM) signals in which real signals are separated from imaginary signals. A time domain position in which the real signal (a peak of the real signal) is located may be referred to as a real signal position, and a time domain position in which the imaginary signal (a peak of the imaginary signal) is located may be referred to as an imaginary signal position. For example, FIG. 6 is a schematic diagram of waveforms of the partially orthogonal relationship. As shown in FIG. 6, a time domain interval between a real signal 1 (shown by a solid line) and an imaginary signal j 1 (shown by a dashed line) is T/2. A time domain interval between a real signal 2 (shown by a solid line) and an imaginary signal j2 (shown by a dashed line) is T/2. It may be learned that the real signal 1 and a next signal, for example, the imaginary signal j 1, are in a non-orthogonal relationship, but the real signal 1 and a next signal of the next signal, for example, the real signal 2, are in an orthogonal relationship. Similarly, the imaginary signal j 1 and a next signal, for example, the real signal 2, are in a non-orthogonal relationship, but the imaginary signal j 1 and a next signal of the next signal, for example, the imaginary signal j2, are in an orthogonal relationship. To be specific, the partially orthogonal relationship means that a signal is in a non-orthogonal relationship with a next signal of the signal, and the signal is in an orthogonal relationship with a next signal of the next signal. An advantage is that a non-peak of an imaginary signal is superimposed on a wave peak of a real signal, to avoid a case in which the wave peak of the real signal is superimposed on a wave peak of the imaginary signal in a complex signal. This may effectively reduce a PAPR of signals. Then, for the QAM signals in which the real signals are separated from the imaginary signals, the UE may perform pulse shaping or perform filtering by using a filter, to further reduce the PAPR of the signals, and obtain shaped real signals and shaped imaginary signals. Finally, the UE may perform downsampling or value extraction processing on the shaped real signals and the shaped imaginary signals, to obtain downsampled real signals and downsampled imaginary signals. The downsampled real signals and the downsampled imaginary signals are sent by using a radio frequency antenna, so that a receive end, for example, a base station, receives the downsampled real signals and the downsampled imaginary signals.

Implementation in frequency domain:

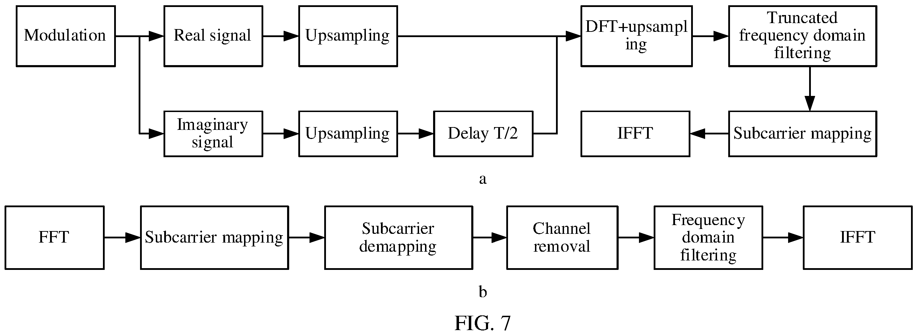

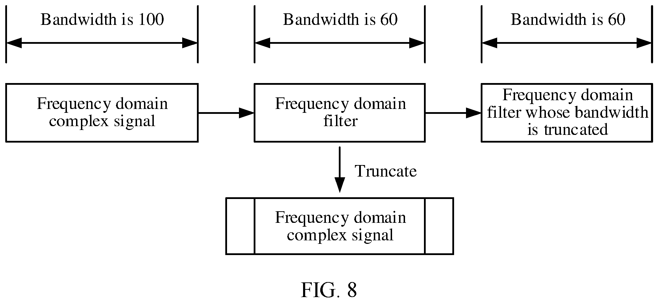

The UE is still used as an example. FIG. 7 is a schematic flowchart of the implementation in frequency domain. As shown in a in FIG. 7, the UE may first modulate to-be-sent data signals into discrete time domain signals, and sequentially perform upsampling on the discrete time domain signals and delay the signals by T/2, to obtain QAM signals in which real signals are separated from imaginary signals. For a specific implementation principle, refer to related descriptions in the implementation in time domain. Details are not described herein again. Then, the UE may perform discrete Fourier transform (discrete fourier transform, DFT) on the QAM signals, to obtain frequency domain real signals such as [X1, X2, X3, ...], and frequency domain imaginary signals such as [jY1, jY2, jY3...]. In this case, the UE may perform upsampling, for example, 2x upsampling, on the frequency domain real signals and the frequency domain imaginary signals, to obtain upsampled frequency domain real signals such as [X1, 0, X2, 0, X3, 0, ...], and upsampled frequency domain imaginary signals such as [0, jY1, 0, jY2, 0, jY3...]. In this way, the UE may combine the upsampled frequency domain real signals and the upsampled frequency domain imaginary signals into frequency domain complex signals such as [X1, jY1, X2, jY2, X3, jY3, ...], for processing in frequency domain. It should be noted that redundant data usually exists in the QAM signals in which the real signals are separated from the imaginary signals. Therefore, after obtaining the frequency domain complex signals, the UE may perform truncated frequency domain filtering on the frequency domain complex signals, to filter out the corresponding redundant data in the frequency domain complex signals, so as to obtain frequency domain complex signals with a truncated bandwidth. For example, FIG. 8 is a schematic diagram of the truncated frequency domain filtering on the signals. As shown in FIG. 8, a bandwidth of the frequency domain complex signals is 100, that is, a length of 100 frequency domain resource blocks, and a bandwidth of a frequency domain filter is 60, that is, a length of 60 frequency domain resource blocks. In this case, the truncated frequency domain filtering is performed on the frequency domain complex signal by using the frequency domain filter, so that a bandwidth of 40 in the frequency domain complex signals may be truncated, that is, 40 redundant signals in the frequency domain complex signals are filtered out, to obtain frequency domain complex signals whose bandwidth is 60. Finally, the UE may sequentially perform subcarrier mapping (subcarrier mapping) and inverse fast Fourier transform (inverse fast fourier transform, IFFT) on the frequency domain complex signals whose bandwidth is truncated, to obtain time domain real signals and time domain imaginary signals, and send the time domain real signals and the time domain imaginary signals by using a radio frequency antenna. Correspondingly, as shown in b in FIG. 7, a receive end, for example, a base station, may receive the time domain real signals and the time domain imaginary signals, and perform the fast Fourier transform (fast Fourier transform, FFT) and the subcarrier demapping on the time domain real signals and the time domain imaginary signals, to obtain frequency domain complex signals. Then, the base station may perform channel removal, frequency domain filtering, and IFFT on a frequency domain complex signal corresponding to a channel, to obtain a time domain real signal and a time domain imaginary signal, so as to subsequently perform phase noise compensation. The channel removal means removal of a channel identifier from the frequency domain complex signal.

5. Multi-user phase noise compensation of SC-OQAM

Similar to the principle of the multi-user phase noise compensation of DFT-s-OFDM, reference signals, for example, PTRSs, may also be used in an SC-OQAM technology, to implement the multi-user phase noise compensation of SC-OQAM by analyzing phase noise interference on the reference signals.

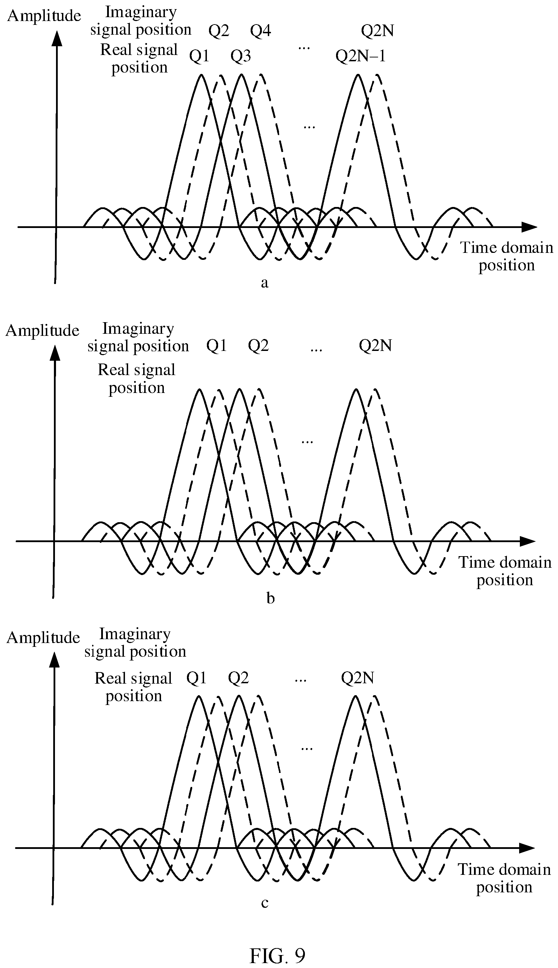

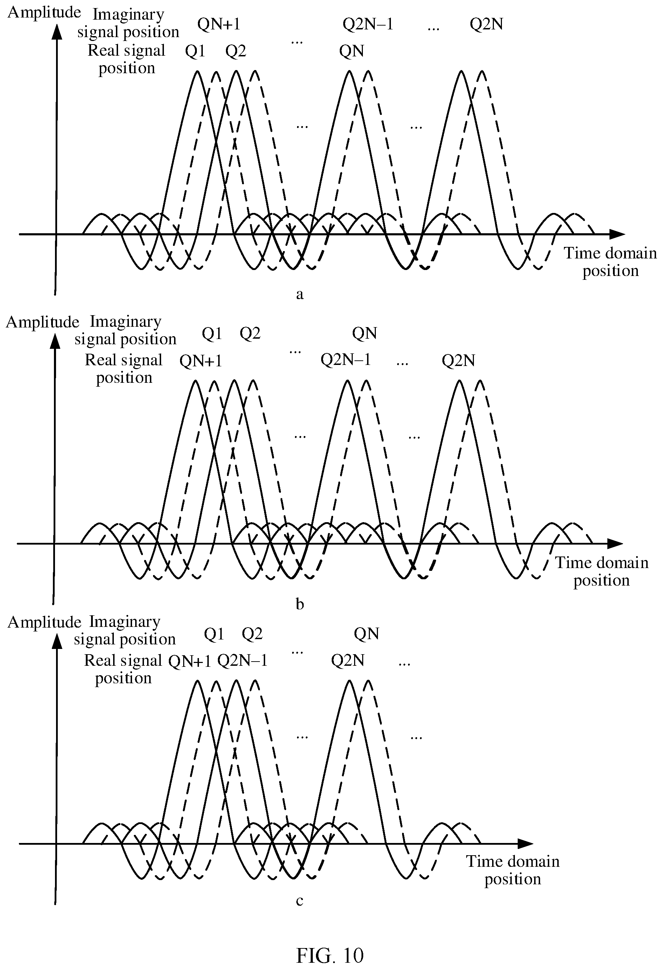

Specifically, if there are 2N reference signals, and N is a positive integer, the 2N reference signals (Q1 to Q2N) may be consecutively placed. The consecutive placement may be consecutive at time domain positions (as shown in a in FIG. 9), may be consecutive at imaginary signal positions (as shown in b in FIG. 9), or may be consecutive at real signal positions (as shown in c in FIG. 9). Alternatively, in some other placement manners, N reference signals are consecutively placed at real signal positions, and the other N reference signals are placed at inconsecutive imaginary signal positions (as shown in a in FIG. 10). Alternatively, N reference signals may be placed at consecutive imaginary signal positions, and the other N reference signals may be placed at inconsecutive real signal positions (as shown in b in FIG. 10). Alternatively, N reference signals may be placed at consecutive real signal positions, and the other N reference signals may be placed at consecutive imaginary signal positions (as shown in c in FIG. 10).

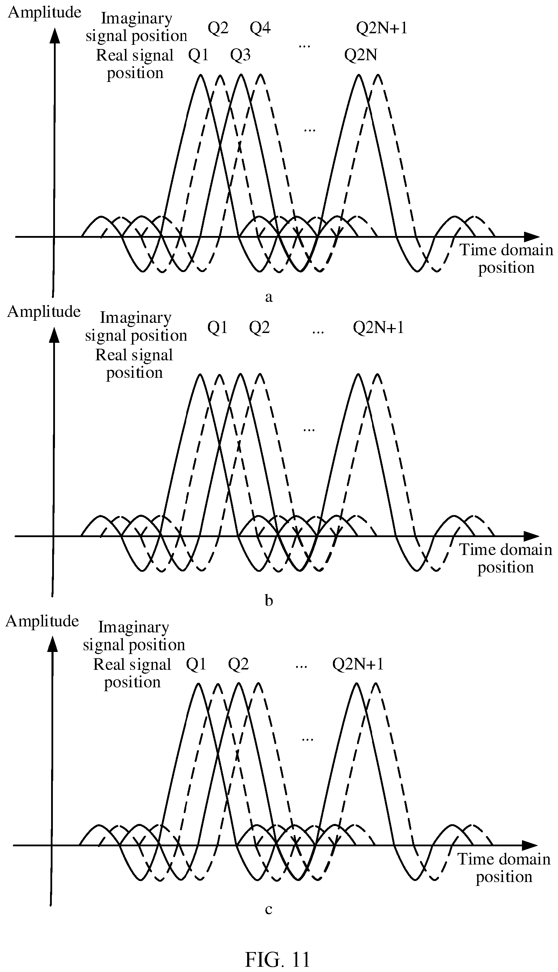

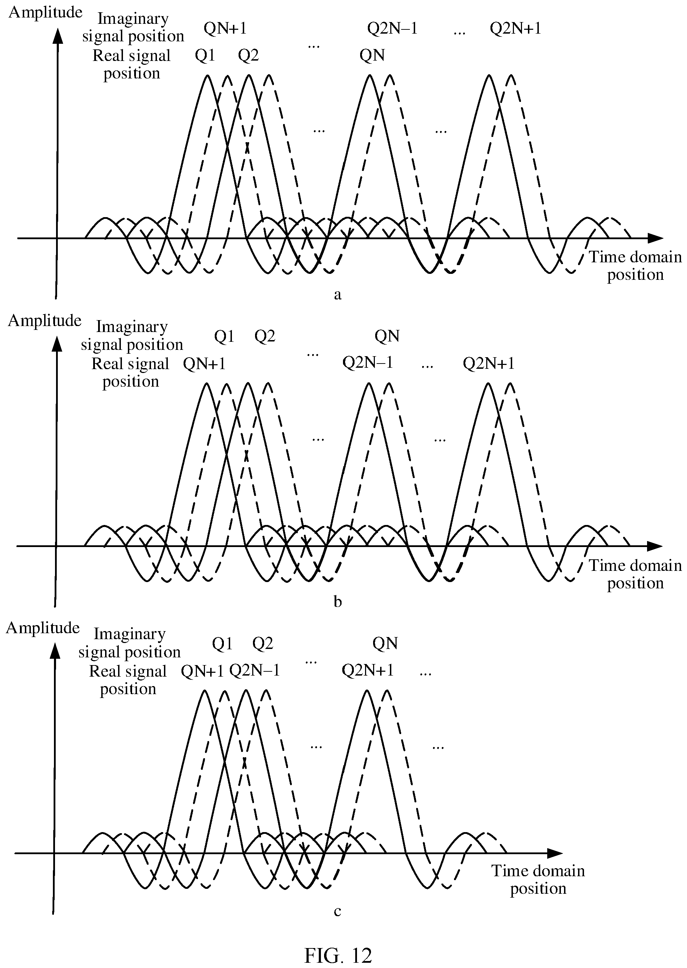

If there are 2N+1 reference signals, the 2N+1 reference signals may be consecutively placed. The consecutive placement may be consecutive at time domain positions (as shown in a in FIG. 11), may be consecutive at imaginary signal positions (as shown in b in FIG. 11), or may be consecutive at real signal positions (as shown in c in FIG. 11). Alternatively, in some other placement manners, N or N+1 reference signals are consecutively placed at real signal position, and the other N or N+1 reference signals are placed at inconsecutive imaginary signal positions (as shown in a in FIG. 12). Alternatively, N or N+1 reference signals may be placed at consecutive imaginary signal positions, and the other N or N+1 reference signals may be placed at inconsecutive real signal positions (as shown in b in FIG. 12). Alternatively, N or N+1 reference signals may be placed at consecutive real signal positions, and the other Nor N+1 reference signals may be placed at consecutive imaginary signal positions (as shown in c in FIG. 12).

It should be noted that a reference signal placed at a real signal position may be a real signal, or may be an imaginary signal. Similarly, a reference signal placed at an imaginary signal position may be a real signal, or may be an imaginary signal. This is not limited. In addition, in a multi-user scenario, 2N or 2N+1 reference signals of each user may be placed in the foregoing manner. This is not limited.

Further, if there are 2N reference signals, N reference signals may be used to cause interference to the other N reference signals, and are also referred to as redundant signals. The other N reference signals may be used for phase noise compensation. For example, if there are 2N+1 reference signals, N or N+1 reference signals may be redundant signals, and the other N or N+1 reference signals may be used for phase noise compensation. In this case, for single-user phase noise compensation, a UE may modulate amplitudes of N or N+1 redundant signals of the user, so that interference to the N or N+1 reference signals of the user is a fixed value. In this way, a base station may determine phase noise of the user based on the fixed value, to implement the single-user phase noise compensation. For multi-user phase noise compensation, the UE may modulate amplitudes of N or N+1 redundant signals of each user, so that interference to the N or N+1 reference signals of each user is a fixed value. On this basis, the UE modulates the signals by using precoding sequences to decouple the signals of the users. In this way, after receiving signals of a plurality of UEs, the base station may determine phase noise of each user based on the fixed value corresponding to each UE, to implement the multi-user phase noise compensation. For ease of understanding, the following separately describes the single-user phase noise compensation and the multi-user phase noise compensation by using four reference signals as an example.

Single-user phase noise compensation:

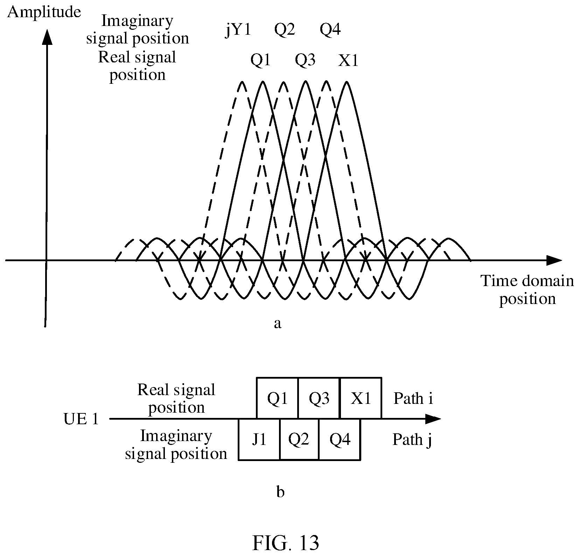

The UE 1 is used as an example, a in FIG. 13 is a schematic diagram of waveforms of the four reference signals of the UE 1, and b in FIG. 13 is a schematic diagram of time domain positions of the four reference signals of the UE 1. As shown in FIG. 13, the four reference signals include Q1, Q2 (a redundant signal), Q3, and Q4 (a redundant signal), Q1 to Q4 are consecutively placed at the time domain positions, Q1 and Q3 are consecutively placed at real signal positions, and Q2 and Q4 are consecutively placed at imaginary signal positions. In addition, FIG. 13 further includes: A data signal jY1 of the UE 1 is placed at an imaginary signal position, and a data signal X1 of the UE 1 is placed at a real signal position.

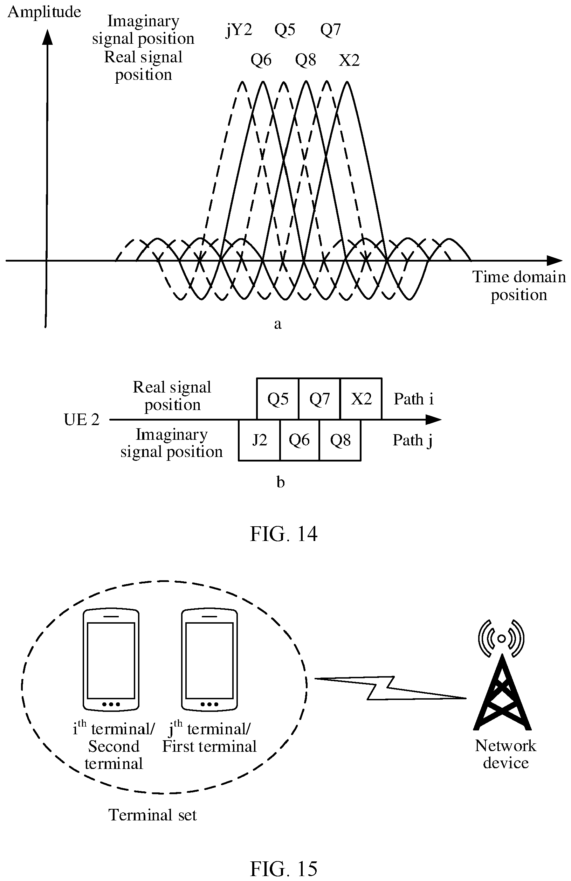

Further, if the UE 1 sends signals shown in FIG. 13 and FIG. 14 to the base station, signals received by the base station may be represented by the formulas 3 and 4:

$$Z1=(Q1+a1*jQ2+a2*jQ4+a3*jY1+a4*X1)*exp(1i*\Theta1) \quad (3);$$

and

$$Z3=(Q3+b1*jQ2+b2*jQ4+b3*jY1+b4*X1)*exp(1i*\Theta1) \quad (4).$$

Z1 is a signal received by the base station at the position where Q1 is placed, a1*jQ2 is interference caused by Q2 to Q1, a2*jQ4 is interference caused by Q4 to Q1, a3*jY1 is interference caused by the data signal jY1 to Q1, a4*X1 is interference caused by the data signal X1 to Q1, and exp(1i*Θ1) is phase noise of the UE 1. Z3 is a signal received by the base station at the position where Q3 is placed, b1*jQ2 is interference caused by Q2 to Q3, b2*jQ4 is interference caused by Q4 to Q3, b3*jY1 is interference caused by the data signal jY1 to Q3, and b4*X1 is interference caused by the data signal X1 to Q3. For ease of description, a1*jQ2+a2* jQ4+a3*jY1+a4*X1=INT1 and b1 *jQ2+b2*jQ4+b3*jY1 +b4*X1 =INT3 are set.

It may be understood that because data carried in the data signals is determinate, a3*jY1, a4*X1, b3*jY1, and b4*X1 are determinate. On this basis, it is assumed that the UE 1 modulates Q1 to Q4, to enable Q1=Q3, that is, amplitudes and polarities of Q1 and Q3 are the same, and INT1=INT3=A1, that is, amplitudes and polarities o INT1 and INT3 are the same, and A1 is a fixed value agreed by the base station and the UE in advance. In this case, the base station may determine a value of the phase noise exp(1i*Θ1), to implement the phase noise compensation for the UE 1, that is, the single-user phase noise compensation.

Multi-user phase noise compensation:

The UE 1 and the UE 2 are used as an example. The signals of the UE 1 are shown in FIG. 13. Details are not described herein again. a in FIG. 14 is a schematic diagram of waveforms of four reference signals of the UE 2. b in FIG. 14 is a schematic diagram of time domain positions of the four reference signals of the UE 2. As shown in FIG. 14, the four reference signals include Q5, Q6 (a redundant signal), Q7, and Q8 (a redundant signal), Q5 to Q8 are consecutively placed at the time domain positions, Q5 and Q7 are consecutively placed at real signal positions, and Q6 and Q8 are consecutively placed at imaginary signal positions. In addition, FIG. 14 further includes: A data signal jY2 of the UE 2 is placed at an imaginary signal position, and a data signal X2 of the UE 2 is placed at a real signal position.

If the UE 1 modulates the signals shown in FIG. 13 by using a precoding sequence [1, 1], the UE 2 modulates the signals shown in FIG. 14 by using a precoding sequence [1, -1], and the UE 1 and the UE 2 simultaneously send the signals (where Q1 and Q5 are placed at the same position, and Q2 and Q6 are placed at the same position.) to the base station, signals received by the base station may be represented by the formulas 5 and 6:

$$Z15=(Q1+INT1)*\exp(1i*\Theta1)+(Q5+a5*jQ6+a6*jQ8+a7*jY2+a8*X2)*\exp(1i*\Theta2)$$

(5);

and

$$Z26=(Q3+INT3)*\exp(1i*\Theta1)-(Q7+b5*jQ6+b6*jQ8+b7*jY2+b8*X2)*\exp(1i*\Theta2)$$

(6).

Z15 is a signal received by the base station at the position where Q1 or Q5 is placed, a5*jQ6 is interference caused by Q6 to Q5, a6*jQ8 is interference caused by Q8 to Q5, a7*jY2 is interference caused by the data signal jY2 to Q5, a8*X2 is interference caused by the data signal X2 to Q5, and exp(1i*Θ2) is phase noise of the UE 2. Z15 is a signal received by the base station at the position where Q3 or Q7 is placed, b5*jQ6 is interference caused by Q6 to Q7, b6*jQ8 is interference caused by Q8 to Q7, b7*jY2 is interference caused by the data signal jY2 to Q8, b8*X2 is interference caused by the data signal X2 to Q8. For ease of description, a5*jQ6+a6*jQ8+a7*jY2+a8*X2=INT5 and Q7+b5*jQ6+b6*jQ8+b7*jY2+b8*X2=INT7 may be set, and the formulas 5 and 6 may be represented as the formulas 7 and 8:

$$Z15=(Q1+INT1)*\exp(1i*\Theta1)+(Q5+INT5)*\exp(1i*\Theta2) \quad (7);$$

and

$$Z26=(Q3+INT3)*\exp(1i*\Theta1)-(Q7+INT7)*\exp(1i*\Theta2) \quad (8).$$

It is assumed that the UE 1 modulates Q1 to Q4, to enable Q1=Q3 and INT1=INT3=A1, and modulates Q5 to Q8, to enable Q5=-Q7, that is, Q5 and Q7 have a same amplitude but opposite polarities, and INT5=-INT7=A2, that is, INT5 and INT7 have a same amplitude but opposite polarities, where A2 is a fixed value agreed by the base station and the UE in advance. The base station may determine values of the phase noise exp(1i*Θ1) and the phase noise exp(1i*Θ2) by using Z15+Z26 and Z15-Z26, to implement the phase noise compensation: the multi-user phase noise compensation, for the UE 1 and the UE 2.

It should be noted that, for a design scheme of the precoding sequences in SC-OQAM, refer to the design scheme of the foregoing precoding sequences in DFT-s-OFDM. That is, to implement the multi-user phase noise compensation of SC-OQAM, at least two reference signals, for example, Q1 and Q3, or Q2 and Q4, are required for phase noise compensation. In addition, if a quantity of users is greater than 2, a quantity and a length of precoding sequences may be correspondingly increased, to implement the phase noise compensation for more users. For example, if a quantity of UEs is 4, precoding sequences corresponding to the four UEs may be: [1, 1, 1, 1], [1, -1, 1, -1], [1, 1, -1, -1], and [1, -1, -1, 1]. If the quantity of UEs is 8, 16, or the like, these cases may be deduced by analogy.

Further, it may be learned from the foregoing descriptions of the PAPR that, while implementing the phase noise compensation, the UE 1 and the UE 2 also need to reduce signal energy as much as possible, to obtain low PAPRs.

For the UE 1, INT1=INT3 meets a requirement of energy minimization, and total energy of Q2 and Q4 is small, so that the PAPR of the UE 1 is low. For example, as shown in FIG. 13, on the basis that interference caused by the data signal X1 and the data signal J1 is not considered, if INT1=INT3=1, energy of Q2 may be modulated to 1.6, and energy of Q4 may be modulated to 0. Q2 causes interference with energy of 1 to Q1 and Q3 separately, to meet INT1=INT3=1. In this case, because the energy of Q4 is 0, the total energy of Q2 and Q4 is the smallest, that is, 1.6.

For the UE 2, INT5=-INT7 does not meet the requirement of energy minimization, or is opposite to INT5=INT7 required for energy minimization. Therefore, total energy of Q6 and Q8 is large, the PAPR of the UE 2 is high, and signal transmission efficiency is low. For example, as shown in FIG. 14, on the basis that interference caused by the data signal X2 and the data signal J2 is not considered, if INT5=-INT7=1, that is, INT5=1 and INT7=-1, energy of Q6 may be modulated to 1.6. Q6 causes interference with energy of 1 to Q5, to meet INT5=1. In addition, because Q6 also causes interference with energy of 1 to Q7, if INT7=-1, energy of Q8 needs to be increased. For example, the energy of Q8 is modulated to -3.2 (where interference of Q8 to Q5 is not considered), Q8 causes interference with energy of -2 to Q7, so that INT7=-2+1=-1. In this case, total energy of Q6 and Q8 is 4.8. That is, for the UE 2, if the multi-user phase noise compensation needs to be implemented, signal energy inevitably increases. As a result, a PAPR of the signals is high, and signal transmission performance is affected.

The following describes technical solutions of this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, or a future communication system such as a 6th generation (6th generation, 6G) mobile communication system. The technical solutions may also be applied to a satellite communication system, an internet of things (internet of things, IoT), a narrowband internet of things (narrowband internet of things, NB-IoT) system, a global system for mobile communications (global system for mobile communications, GSM), an enhanced data rate for GSM evolution (enhanced data rate for GSM evolution, EDGE), a wideband code division multiple access (wideband code division multiple access, WCDMA), a code division multiple access 2000 (code division multiple access, CDMA2000) system, a time division-synchronous code division multiple access (time division-synchronization code division multiple access, TD-SCDMA) system, a device-to-device (device-to-device, D2D) communication system, a machine-to-machine (machine-to-machine, M2M) communication system, and three application scenarios of the 5G mobile communication system: enhanced mobile broadband (enhanced mobile broadband, eMBB), ultra-reliable low-latency communication (ultra-reliable low-latency communication, uRLLC), and massive machine-type communications (massive machine-type communications, mMTC).

All aspects, embodiments, or features are presented in this application by describing a system that may include a plurality of devices, components, modules, and the like. It should be understood and understood that each system may include another device, component, module, and the like, and/or may not include all devices, components, modules, and the like discussed with reference to the accompanying drawings. In addition, combinations of these schemes may also be used.

In addition, in embodiments of this application, the word such as "example" or "for example" is used to represent giving an example, an illustration, or a description. Any embodiment or design scheme described as an "example" in this application should not be explained as being more preferred or having more advantages than another embodiment or design scheme. Exactly, use of the word "example" is intended to present a related concept in a specific manner.

In embodiments of this application, the terms "information (information)", "signal (signal)", "message (message)", "channel (channel)", and "signaling (signaling)" may be interchangeably used sometimes. It should be noted that meanings expressed by the terms are consistent when differences between the terms are not emphasized. Terms "of (of)", "corresponding (corresponding, relevant)", and corresponding (corresponding) may be interchangeably used sometimes. It should be noted that meanings expressed by the terms are consistent when differences between the terms are not emphasized.

In embodiments of this application, sometimes a subscript, for example, $_{WI}$, may be written in an incorrect form such as WI. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

To better understand embodiments of this application, a communication system applicable to embodiments of this application is described in detail by using a communication system shown in FIG. 15 as an example. For example, FIG. 15 is a schematic diagram of an architecture of a communication system to which a signal transmission method provided in an embodiment of this application is applied.

As shown in FIG. 15, the communication system includes a network device and a terminal set, for example, M terminals or a first terminal, where M is an integer greater than 1.

The network device is a device that is located on a network side of the communication system and that has a wireless transceiver function, or a chip or a chip system that may be disposed in the device. The network device includes but is not limited to an access point (access point, AP) in a wireless fidelity (wireless fidelity, Wi-Fi) system, for example, a home gateway, a router, a server, a switch, or a network bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), a wireless relay node, a wireless backhaul node, a transmission point (transmission and reception point, TRP, or transmission point), may be a gNB or a transmission point (a TRP or a TP) in a 5G system such as a new radio (new radio, NR) system, may be one or a group of antenna panels (including a plurality of antenna panels) of a base station in the 5G system, or may be a network node included in the gNB or the transmission point, for example, a baseband unit (BBU), a distributed unit (distributed unit, DU), or a road side unit (road side unit, RSU) having a base station function.

Any terminal in the terminal set, for example, the first terminal, is a terminal that accesses the communication system and that has a wireless transceiver function, or a chip or a chip system that may be disposed in the terminal. The terminal may also be referred to as a station apparatus, an access terminal, a subscriber unit, a subscriber station, a mobile station, a remote station, a remote terminal, a mobile device, a user terminal, a terminal, a wireless communication device, a user agent, or a user apparatus. The terminal in embodiments of this application may be a mobile phone (mobile phone), a tablet computer (Pad), a computer having a wireless transceiver function, a handheld device (handset), a laptop computer (laptop computer), a machine type communication (machine type communication, MTC) device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, and the like. The terminal device in this application may alternatively be a vehicle-mounted module, a vehicle-mounted module group, a vehicle-mounted part, a vehicle-mounted chip, or a vehicle-mounted unit that is built in a vehicle as one or more parts or units.

It should be noted that the signal transmission method provided in embodiments of this application may be used between any two nodes shown in FIG. 15, for example, between the terminal set and the network device. For a specific implementation, refer to the following method embodiments. Details are not described herein.

It should be noted that the solutions in embodiments of this application may be further applied to another communication system, and a corresponding name may also be replaced with a name of a corresponding function in the another communication system.

It should be understood that FIG. 15 is merely a simplified schematic diagram of an example for ease of understanding. The communication system may further include another network device and/or another terminal, which are/is not shown in FIG. 15.

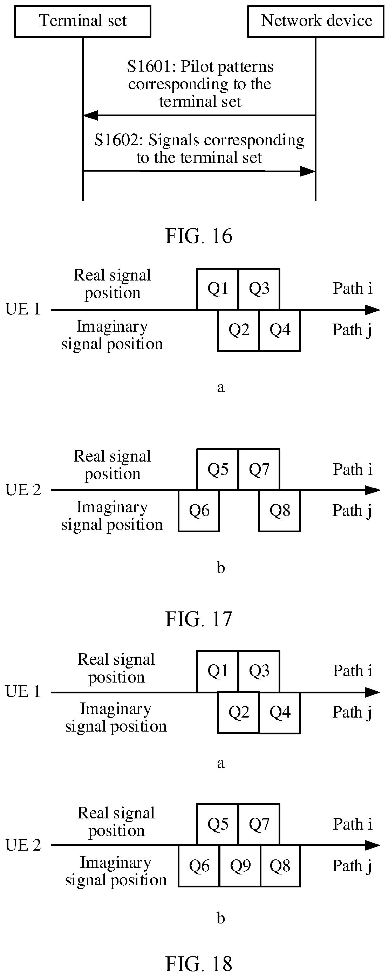

The following describes in detail the signal transmission method provided in embodiments of this application with reference to FIG. 16 to FIG. 20.

For example, FIG. 16 is a schematic diagram 1 of a signal transmission method according to an embodiment of this application. The signal transmission method may be applicable to communication between any two nodes shown in FIG. 15, for example, communication between the terminal set and the network device. As shown in FIG. 16, the signal transmission method includes the following steps.

S1601: The network device sends pilot patterns corresponding to the terminal set, and the terminal set obtains the pilot patterns corresponding to the terminal sets.

The terminal set includes M terminals, and M is an integer greater than 1. For ease of understanding, the following describes the technical solution in this application by using any two terminals in the M terminals, for example, the $i^{th}$ terminal and the $j^{th}$ terminal, as an example. For a specific implementation of another terminal in the M terminals, refer to related descriptions of the $i^{th}$ terminal and the $j^{th}$ terminal in the following descriptions. Details are not described herein.

Specifically, in the pilot patterns corresponding to the M terminals, the pilot pattern of the $i^{th}$ terminal indicates that a first reference signal is located at (or placed at) a first time domain position, and a second reference signal is located at a second time domain position. The pilot pattern of the $j^{th}$ terminal indicates that a third reference signal is located at the first time domain position, that is, the third reference signal and the first reference signal are located at the same time domain position, and the fourth reference signal is located at a third time domain position, that is, the fourth reference signal and the second reference signal are located at different time domain positions. The first reference signal is a reference signal used by the $i^{th}$ terminal for phase noise compensation, and the second reference signal is a redundant signal. The third reference signal is a reference signal used by the $j^{th}$ terminal for phase noise compensation, and the fourth reference signal is a redundant signal. The first time domain position is a real signal position, and the second time domain position and the third time domain position are imaginary signal positions. Alternatively, the first time domain position is an imaginary signal position, and the second time domain position and the third time domain position are real signal positions. For a specific implementation, refer to the foregoing related descriptions of SC-OQAM. Details are not described herein again.

The $i^{th}$ terminal is provided with a first precoding sequence, for example, [1, 1], and the $j^{th}$ terminal is provided with a second precoding sequence different from the first precoding sequence, for example, [1, -1]. It should be understood that, that the first precoding sequence is [1, 1] and the second precoding sequence is [1, -1] is merely an example, and constitutes no limitation. Alternatively, the first precoding sequence and the second precoding sequence may use other values. For example, the first precoding sequence is [1, 1, 1, 1], and the second precoding sequence is [1, -1, 1, -1]. The first precoding sequence may be configured by the network device for the $i^{th}$ terminal, or may be preconfigured locally on the $i^{th}$ terminal according to a protocol. Similarly, the second precoding sequence may be configured by the network device for the $j^{th}$ terminal, or may be preconfigured locally on the $j^{th}$ terminal according to the protocol. This is not limited. If a value (for example, 1) corresponding to the first reference signal in the first precoding sequence is opposite to a value (for example, -1) corresponding to the third reference signal in the second precoding sequence, a time domain interval between the first time domain position and the second time domain position is less than or greater than a time domain interval between the first time domain position and the third time domain position. In this case, interference caused by the second reference signal to the first reference signal can be reduced, or interference caused by the fourth reference signal to the third reference signal can be reduced, to reduce energy required for modulating the first reference signal or the third reference signal. While multi-user phase noise compensation is implemented, a PAPR of the signals is reduced, and signal transmission performance is improved, for example, a coverage area is larger and distortion is smaller. For ease of understanding, an example in which the time domain interval between the first time domain position and the second time domain position is less than the time domain interval between the first time domain position and the third time domain position is used below for description.

Further, it may be learned from the foregoing related descriptions of SC-OQAM that, to implement the multi-user phase noise compensation, at least two reference signals are required for phase noise compensation. To be specific, to implement the phase noise compensation for the $i^{th}$ terminal and the $j^{th}$ terminal, the pilot pattern of the $i^{th}$ terminal indicates not only the time domain positions of the first reference signal and the second reference signal, but also time domain positions of more reference signals, for example, time domain positions of a fifth reference signal and a sixth reference signal. Similarly, the pilot pattern of the $i^{th}$ terminal indicates not only the time domain positions of the third reference signal and the fourth reference signal, but also time domain positions of more reference signals, for example, time domain positions of a seventh reference signal and an eighth reference signal, or time domain positions of the seventh reference signal, the eighth reference signal, and a ninth reference signal. This is described below.

In a first implementation, the pilot pattern of the $i^{th}$ terminal may indicate that the fifth reference signal is located at a fourth time domain position, and the sixth reference signal is located at a fifth time domain position. The pilot pattern of the $j^{th}$ terminal may further indicate that the seventh reference signal and the fifth reference signal are located at the same fourth time domain position, and the eighth reference signal is located at the fifth time domain position.

The fifth reference signal is a reference signal used by the $i^{th}$ terminal for phase noise compensation, and the sixth reference signal is a redundant signal. The seventh reference signal is a reference signal used by the $j^{th}$ terminal for phase noise compensation, and the eighth reference signal is a redundant signal. In addition, the fourth time domain position may be a real signal position, and the fifth time domain position may be an imaginary signal position. Alternatively, the fourth time domain position may be an imaginary signal position, and the fifth time domain position may be a real signal position. For a specific implementation, refer to the related descriptions of the placement positions of the reference signals in SC-OQAM. In this case, with reference to the foregoing related descriptions of the first time domain position, the second time domain position, and the third time domain position, it may be learned that the reference signals used for phase noise compensation and the redundant signals, that is, the reference signals used for interfering, are separately located at the real signal positions and the imaginary signal positions. The redundant signals and the reference signals used for phase noise compensation may be in a partially orthogonal relationship, where the redundant signals and the reference signals are real signals and imaginary signals respectively, to reduce interference between the reference signals. This further reduces the PAPR of the signals, and further improves the signal transmission performance.

Further, the pilot pattern of the $i^{th}$ terminal or the pilot pattern of the $j^{th}$ terminal may indirectly indicate the time domain position of the reference signals by using position indexes, or may directly indicate the time domain positions of the reference signals by using specific time domain positions. For example, the position indexes are used for indication. The pilot pattern of the $j^{th}$ terminal may include a first position index, a third position index, a fourth position index, and a fifth position index. The pilot pattern of the $i^{th}$ terminal may include the first position index, a second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive. To be specific, the time domain sequence numbers of the third position index, the fourth position index, the second position index, the first position index, and the fifth position index are successively consecutive, and the time domain positions indicated by the third position index, the fourth position index, the second position index, the first position index, and the fifth position index are successively adjacent. To be specific, the third time domain position is adjacent to the fourth time domain position, the fourth time domain position is adjacent to the second time domain position, the second time domain position is adjacent to the first time domain position, and the first time domain position is adjacent to the fifth time domain position. In this case, interference caused by the fourth reference signal of the $j^{th}$ terminal to the seventh reference signal is the same as interference caused by the second reference signal of the $i^{th}$ terminal to the fifth reference signal, and is strong enough, so that accuracy of the phase noise compensation can be ensured. In addition, interference caused by the fourth reference signal of the $j^{th}$ terminal to the third reference signal is less than interference caused by the second reference signal of the $i^{th}$ terminal to the first reference signal, so that energy required for signal modulation may be reduced, to reduce the PAPR of the signals. This implements both the accuracy of the phase noise compensation and the low PAPR.

Further, in the first precoding sequence, the value (for example, 1) corresponding to the first reference signal is the same as a value (for example, 1) corresponding to the fifth reference signal. In the second precoding sequence, the value (for example, 1) corresponding to the third reference signal is opposite to a value (for example, -1) corresponding to the seventh reference signal.

In this case, the first reference signal and the third reference signal that are modulated by the $i^{th}$ terminal by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. In addition, optionally, amplitudes of the first reference signal and the fifth reference signal may be the same, and amplitudes of the first interfering signal and the second interfering signal may be the same, to reduce a quantity of variables in a signal modulation process, so that the $i^{th}$ terminal can obtain a corresponding signal through modulation more quickly, to improve signal modulation efficiency.

Similarly, the third reference signal and the seventh reference signal that are modulated by the $j^{th}$ terminal by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal. In addition, optionally, amplitudes of the second reference signal and the sixth reference signal may be the same, and amplitudes of the third interfering signal and the fourth interfering signal may be the same, to reduce a quantity of variables in a signal modulation process, so that the $j^{th}$ terminal can obtain a corresponding signal through modulation more quickly, to improve signal modulation efficiency.

It may be learned that for the $j^{th}$ terminal, two conditions need to be met to determine the multi-user phase noise compensation. Condition 1: The polarity of the third reference signal is opposite to that of the seventh reference signal. Condition 2: The polarity of the third interfering signal of the third reference signal is opposite to that of the fourth interfering signal of the seventh reference signal. That is, the $j^{th}$ terminal needs to determine, on the basis that Condition 1 and Condition 2 are met, energy required for modulating two reference signals, for example, the fourth reference signal and the eighth reference signal. In this case, a time domain interval between the third reference signal and the fourth reference signal is increased, so that interference caused by the fourth reference signal to the third reference signal may be reduced, to reduce energy required for modulating the third interfering signal to a polarity opposite to that of the fourth interfering signal. For example, the fourth interfering signal is 1, and the third interfering signal is -1. If the interference caused by the fourth reference signal to the third reference signal is reduced from 0.7 to 0.3, energy required for modulating the third interfering signal to -1 is reduced from |-1.7| to |-1.3|. Therefore, the PAPR of the signals is reduced, and the signal transmission performance is improved.

For ease of understanding, the UE 1 and the UE 2 are still used as an example below for description.

Example 1: FIG. 17 shows pilot patterns corresponding to the UE 1 and the UE 2. As shown in a in FIG. 17, the pilot pattern of the UE 1 indicates: Q1 (the first reference signal), Q2 (the second reference signal), Q3 (the fifth reference signal), and Q4 (the sixth reference signal), where Q1 to Q4 are consecutively placed at time domain positions, Q1 and Q3 are consecutively placed at real signal positions, and Q2 and Q4 are consecutively placed at imaginary signal positions. As shown in b in FIG. 17, the pilot pattern of the UE 2 indicates Q5 (the third reference signal), Q6 (the fourth reference signal), Q7 (the seventh reference signal), and Q8 (the eighth reference signal), where Q5 and Q7 are consecutively placed at real signal positions, Q6 and Q8 are inconsecutively placed at imaginary signal positions, and an interval between Q6 and Q8 is an imaginary signal position.

In this case, the UE 1 determines, based on the pilot pattern of the UE 1 and the first precoding sequence [1, 1], a signal S1 that needs to be transmitted by the UE 1 at the time domain position (or the fourth time domain position) of Q1, and a signal S3 that needs to be transmitted at the time domain position (or the first time domain position) of Q3. The signal S1 may be shown in the formula 5, and S3 may be shown in the formula 6:

$$S1=Q1+a1*jQ2+a2*jQ4 \quad (5);$$

and

$$S3=Q3+b1*jQ2+b2*jQ4 \quad (6).$$

a1*jQ2 is interference caused by Q2 to Q1, a2*jQ4 is interference caused by Q4 to Q1, b1*jQ2 is interference caused by Q2 to Q3, and b2*jQ4 is interference caused by Q4 to Q3. a1*jQ2+a2*jQ4=InT1 and b1*jQ2+b2*jQ4= InT3 are set. The formulas 5 and 6 may be represented as the formulas 7 and 8:

$$S1=Q1+InT1 \quad (7);$$

and

$$S3=Q3+InT3 \quad (8).$$

Further, it may be learned from the foregoing related descriptions of SC-OQAM that, to implement phase noise compensation for the UE 1, Q1 to Q4 need to be modulated, so that Q1=Q3 and InT1=InT3. In this case, InT1=InT3 meets a requirement of energy minimization, that is, a PAPR of S 1 and S3 is low.

In addition, the UE 2 determines, based on the pilot pattern of the UE 2 and the second precoding sequence [1, -1], a signal S5 that needs to be transmitted by the UE 2 at the time domain position (or the fourth time domain position) of Q5, and a signal S7 that needs to be transmitted at the time domain position (or the first time domain position) of Q7. The signal S5 may be shown in the formula 9, and the signal S7 may be shown in the formula 10:

$$S5=Q5+a3*jQ6+a4*jQ8 \quad (9);$$

and

$$S7=-(Q7+b3*jQ6+b4*jQ8) \quad (10).$$

a3*jQ6 is interference caused by Q6 to Q5, a4*jQ8 is interference caused by Q8 to Q5, b3*jQ6 is interference caused by Q6 to Q5, and b4*jQ8 is interference caused by Q8 to Q7. a3*jQ6+a4*jQ8=InT5 and b3*jQ6+b4*jQ8= InT7 are set. The formulas 9 and 10 may be represented as the formulas 11 and 12:

$$S5=Q5+InT5 \quad (11);$$

and

$$S7=-(Q7+InT7) \quad (12).$$

Further, it may be learned from the foregoing related descriptions of SC-OQAM that, to implement phase noise compensation for the UE 2, Q5 to Q8 need to be modulated, so that Q5=-Q7 and InT5=-InT7. In this case, although InT5=-InT7 does not meet the requirement of energy minimization, that is, InT5=InT7, because a time domain interval between Q6 and Q7 is large, for example, greater than a time domain interval between Q2 and Q3, interference caused by Q6 to Q7 is reduced, so that energy required for modulating Q8 to-InT7 is less. For example, if INT5=-INT7=1, energy of Q6 may be modulated to 1.6, so that Q6 causes interference with energy of 1 to Q5, to meet INT5=1. In addition, Q6 may also cause interference with energy of 0.3 to Q7. On this basis, energy of Q8 may be slightly increased. For example, the energy of Q8 is modulated to -1.7 (where the interference caused by Q8 to Q5 is not considered), so that Q8 causes interference with energy of -1.3 to Q7, so that INT7=-1.3+0.3=-1. In this way, total energy of Q6 and Q8 decreases to 3.4, and a PAPR of the UE 2 decreases.

In a second implementation, the pilot pattern of the $i^{th}$ terminal may further indicate that the fifth reference signal is located at a fourth time domain position, and the sixth reference signal is located at a fifth time domain position. The pilot pattern of the $j^{th}$ terminal may further indicate that the seventh reference signal and the fifth reference signal are located at the same fourth time domain position, the eighth reference signal is located at the fifth time domain position, and the ninth reference signal is located at the second time domain position.

For specific implementations of the fifth reference signal to the eighth reference signal, refer to the related descriptions in the first implementation. Details are not described herein again. In addition, the ninth reference signal may be a redundant signal, and is located at the second time domain position.

Further, the pilot pattern of the $i^{th}$ terminal or the pilot pattern of the $j^{th}$ terminal may also indirectly indicate the time domain position of the reference signals by using position indexes, or may directly indicate the time domain positions of the reference signals by using specific time domain positions. For example, the position indexes are still used for indication. The pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index. For specific implementations of the first position index to the fifth position index, refer to the related descriptions in the first implementation. Details are not described herein again.

Further, in the first precoding sequence, the value (for example, 1) corresponding to the first reference signal is the same as a value (for example, 1) corresponding to the fifth reference signal. In the second precoding sequence, the value (for example, 1) corresponding to the third reference signal is opposite to a value (for example, -1) corresponding to the seventh reference signal. In this case, the first reference signal and the third reference signal that are modulated by the $i^{th}$ terminal by using the first precoded sequence may meet the relationship in the first implementation. Details are not described herein again. However, the third reference signal and the seventh reference signal that are modulated by the $j^{th}$ terminal by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal. In addition, optionally, amplitudes of the second reference signal and the sixth reference signal may be the same, and amplitudes of the third interfering signal and the fourth interfering signal may also be the same.

It may be learned that for the $j^{th}$ terminal, two conditions need to be met to determine the multi-user phase noise compensation. Condition 1: The polarity of the third reference signal is opposite to that of the seventh reference signal. Condition 2: The polarity of the third interfering signal of the third reference signal is opposite to that of the fourth interfering signal of the seventh reference signal. In this case, by setting a plurality of, for example, three, reference signals or redundant signals that are used for interfering: the fourth reference signal, the eighth reference signal, and the ninth reference signal, on the basis that Condition 1 and Condition 2 are met, the $j^{th}$ terminal may determine a plurality of energy combinations for the plurality of redundant signals, that is, determine three variables (energy values of the fourth reference signal, the eighth reference signal, and the ninth reference signal) based on two equations (Condition 1 and Condition 2). In this way, the $j^{th}$ terminal may determine an optimal energy solution of the plurality of redundant signals, that is, lowest energy of the plurality of redundant signals, to further reduce the PAPR of the signals, so that the signal transmission performance is further improved.

For ease of understanding, the UE 1 and the UE 2 are still used as an example below for description.

Example 2: FIG. 18 shows pilot patterns corresponding to the UE 1 and the UE 2. As shown in a in FIG. 18, the pilot pattern of the UE 1 indicates: Q1 (the first reference signal), Q2 (the second reference signal), Q3 (the fifth reference signal), and Q4 (the sixth reference signal), where Q1 to Q4 are consecutively placed at time domain positions, Q1 and Q3 are consecutively placed at real signal positions, and Q2 and Q4 are consecutively placed at imaginary signal positions. As shown in b in FIG. 18, the pilot pattern of the UE 2 indicates: Q5 (the third reference signal), Q6 (the fourth reference signal), Q7 (the seventh reference signal), Q8 (the eighth reference signal), and Q9 (the ninth reference signal), where Q5 and Q7 are consecutively placed at real signal positions, and Q6, Q8, and Q9 are consecutively placed at imaginary signal positions.

The UE 1 determines, based on the pilot pattern of the UE 1 and the first precoding sequence [1, 1], a signal S1 that needs to be transmitted by the UE 1 at the time domain position (or the fourth time domain position) of Q1, and the signal S3 that needs to be transmitted at the time domain position (or the first time domain position) of Q3. For a specific implementation, refer to the related descriptions in the first implementation. Details are not described herein again.

In addition, the UE 2 determines, based on the pilot pattern of the UE 2 and the second precoding sequence [1, -1], a signal S5 that needs to be transmitted by the UE 2 at the time domain position (or the fourth time domain position) of Q5, and a signal S7 that needs to be transmitted at the time domain position (or the first time domain position) of Q7. The signal S5 may be shown in the formula 13, and the signal S7 may be shown in the formula 14:

$$S5=Q5+a3*jQ6+a4*jQ8+a5*jQ9 \quad (13);$$

and

$$S7=-(Q7+b3*jQ6+b4*jQ8+b5*jQ9) \quad (14).$$

a3*jQ6 is interference caused by Q6 to Q5, a4*jQ8 is interference caused by Q8 to Q5, a5*jQ9 is interference caused by Q9 to Q5, b3*jQ6 is interference caused by Q6 to Q7, b4*jQ8 is interference caused by Q8 to Q7, and b5*jQ9 is interference caused by Q9 to Q7. a3*jQ6+a4*jQ8+a5*jQ9=InT5 'and b3*jQ6+b4*jQ8+b5*jQ9=InT7' are set. The formulas 13 and 14 may be represented as the formulas 15 and 16:

$$S5=Q5+InT5' \quad (15);$$

and

$$S7=-(Q7+InT7') \quad (16).$$

Further, it may be learned from the foregoing related descriptions of SC-OQAM that, to implement phase noise compensation for the UE 2, Q5 to Q9 need to be modulated, so that Q5=-Q7 and InT5=-InT7. In this case, InT5=-InT7 does not meet the requirement of energy minimization, that is, InT5=InT7. However, when the formulas 15 and 16 (that is, two equations) are met, there are a plurality of energy combinations of Q6, Q8, and Q9 (for determining three unknown numbers), so that the UE 2 may determine an optimal solution of minimum total energy of Q6, Q8, and Q9. For example, considering that waveforms are usually real symmetric, and real and imaginary signals use a same waveform, sampling coefficients of the waveforms may be set to a3=a5=b4=b5 and a4=b3. If C=2*a3*a5+a4*a4 and D=a3*a5+a3*a4, energy of Q6 is shown in the formula 17, energy of Q8 is shown in the formula 18, and energy of Q9 is shown in the formula 19. The total energy of Q6, Q8, and Q9 is the smallest, as shown in the formula 20.

$$Q_6 = \frac{1}{(C-D)(C+D)}\left[S_5 - ISI_5, S_7 - ISI_7\right]\begin{bmatrix} C, -D \\ -D, C \end{bmatrix}\begin{bmatrix} a_3 \\ a_4 \end{bmatrix} \quad (17);$$

$$Q_8 = \frac{1}{(C-D)(C+D)}\left[S_5 - ISI_5, S_7 - ISI_7\right]\begin{bmatrix} C, -D \\ -D, C \end{bmatrix}\begin{bmatrix} a_4 \\ a_3 \end{bmatrix} \quad (18);$$

$$Q_9 = \frac{1}{(C-D)(C+D)}\left[S_5 - ISI_5, S_7 - ISI_7\right]\begin{bmatrix} C, -D \\ -D, C \end{bmatrix}\begin{bmatrix} a_3 \\ a_3 \end{bmatrix} \quad (19);$$

and

$$Q_6{}^2 + Q_8{}^2 + Q_9{}^2 = \left[\left(\frac{(S_5 - ISI_5)C - (S_7 - ISI_7)D}{(C - D)(C + D)}\right)^2, \left(\frac{(S_7 - ISI_7)C - (S_5 - ISI_5)D}{(C - D)(C + D)}\right)^2\right]\begin{bmatrix} 2(a_3)^2 + (a_4)^2 \\ 2(a_4)^2 + (a_3)^2 \end{bmatrix}$$

(20).

ISIS is interference caused by another data signal to the signal S5, and ISI7 is interference caused by the another data signal to the signal S7.

In addition, in this embodiment of this application, that the network device sends pilot patterns corresponding to the terminal set may be sending at least one of the following that carries the pilot patterns corresponding to the terminal set: downlink control information (downlink control information, DCI), a media access control-control element (media access control-control element, MAC-CE), or radio resource control (radio resource control, RRC) signaling. Correspondingly, that the terminal set obtains the pilot patterns corresponding to the terminal set may be receiving, from the network device, at least one of the following: the DCI, the MAC-CE, or the RRC signaling, to obtain the pilot patterns corresponding to the terminal set. Alternatively, the pilot patterns corresponding to the terminal set may be preconfigured locally, and the terminal set may directly obtain the pilot patterns corresponding to the terminal set locally.

S 1602: The terminal set sends signals corresponding to the terminal set to the network device, and the network device receives the signals corresponding to the terminal set.

The $i^{th}$ terminal and the $j^{th}$ terminal are still used as an example. The $i^{th}$ terminal may modulate signals of the $i^{th}$ terminal, for example, the signal S 1 and the signal S3, and send the signals to the network device. The $j^{th}$ terminal may modulate signals of the $j^{th}$ terminal, for example, the signal S5 and the signal S7, and send the signals to the network device. For a specific implementation, refer to the related descriptions of SC-OQAM. Details are not described herein again. Correspondingly, the network device may receive and demodulate the signals of the $i^{th}$ terminal and the signals of the $j^{th}$ terminal. For a specific implementation, refer to the foregoing related descriptions of SC-OQAM. Details are not described herein again.

It should be understood that the signals of the $i^{th}$ terminal and the signals of the $j^{th}$ terminal are interfered with by phase noise in a transmission process, so that a signal obtained by the network device through demodulation also carries the phase noise. In this case, the network device may add and subtract the signals, to determine phase noise of the $i^{th}$ terminal and phase noise of the $j^{th}$ terminal, to implement the multi-user phase noise compensation. For a specific implementation, refer to the foregoing related descriptions of SC-OQAM. Details are not described herein again.

In conclusion, it may be learned from the signal transmission method shown in FIG. 16 that the value corresponding to the first reference signal in the first precoding sequence is opposite to the value corresponding to the third reference signal in the second precoding sequence. A condition required for multi-user phase noise compensation may be met, so that the multi-user phase noise compensation is implemented. On this basis, a time domain interval between reference signals is increased. For example, the time domain interval between the first time domain position and the second time domain position is greater than the time domain interval between the first time domain position and the third time domain position, or the time domain interval between the first time domain position and the third time domain position is greater than the time domain interval between the first time domain position and the second time domain position, so that interference caused by the second reference signal to the first reference signal can be reduced, or interference caused by the fourth reference signal to the third reference signal can be reduced. In this way, energy required for modulating the first reference signal or the third reference signal is reduced. While the multi-user phase noise compensation is implemented, the PAPR of the signal is reduced, and the signal transmission performance is improved, to achieve a larger coverage area and smaller distortion.

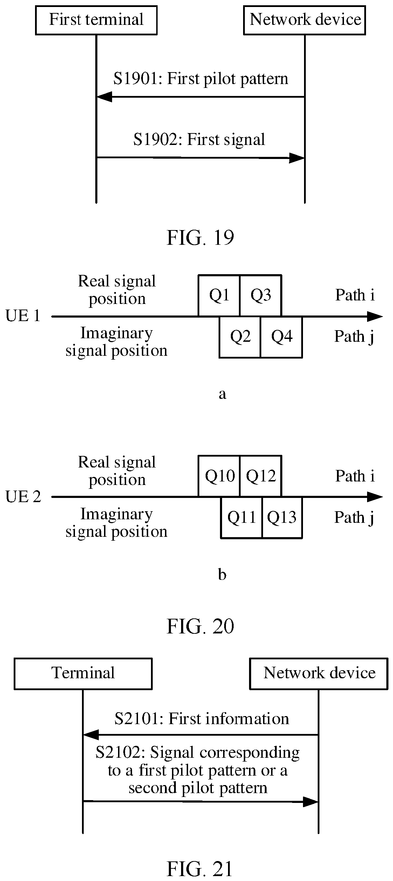

For example, FIG. 19 is a schematic diagram 2 of a signal transmission method according to an embodiment of this application. The signal transmission method may be applicable to communication between any two nodes shown in FIG. 15, for example, between the first terminal and the network device. As shown in FIG. 19, the signal transmission method includes the following steps.

S1901: The network device sends a first pilot pattern of the first terminal, and the first terminal obtains the first pilot pattern of the first terminal.

Reference signals indicated by the first pilot pattern may meet the following rule: A polarity of a tenth reference signal indicated by the first pilot pattern is opposite to that of an eleventh reference signal indicated by the first pilot pattern. A polarity of a fifth interfering signal of the tenth reference signal is the same as that of a sixth interfering signal of the eleventh reference signal. The fifth interfering signal includes interfering signals generated by a plurality of reference signals (redundant signals) indicated by the first pilot pattern for the tenth reference signal, and the sixth interfering signal includes interfering signals generated by the plurality of reference signals (redundant signals) indicated by the first pilot pattern for the eleventh reference signal. Optionally, amplitudes of the tenth reference signal and the eleventh reference signal may be the same, and amplitudes of the fifth interfering signal and the sixth interfering signal may be the same, to reduce a quantity of variables in a signal modulation process, so that the first terminal can obtain a corresponding signal through modulation more quickly, to improve signal modulation efficiency.

The first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions. In this case, compared with a solution in which the tenth reference signal and the eleventh reference signal are respectively located at a real signal position and an imaginary signal position, the tenth reference signal and the eleventh reference signal are both located at the real signal positions or are both located at the imaginary signal positions, so that real-imaginary conversion does not need to be performed in a signal modulation procedure, to simplify the modulation procedure. In this way, the first terminal can obtain a corresponding signal through modulation more quickly, to improve signal modulation efficiency.

Optionally, the plurality of reference signals indicated by the first pilot pattern may include a twelfth reference signal and a thirteenth reference signal. In this case, the first pilot pattern may further indicate that the twelfth reference signal is located at an eighth time domain position, and the thirteenth reference signal is located at a ninth time domain position. If the sixth time domain position and the seventh time domain position are real signal positions, the eighth time domain position and the ninth time domain position may be imaginary signal positions. Alternatively, if the sixth time domain position and the seventh time domain position are imaginary signal positions, the eighth time domain position and the ninth time domain position may be real signal positions. That is, reference signals (or redundant signals) used for interfering, for example, the twelfth reference signal and the thirteenth reference signal, and reference signals used for phase noise compensation, for example, the tenth reference signal and the eleventh reference signal, are respectively located at the real signal positions and the imaginary signal positions. In this case, the redundant signals and the reference signals used for phase noise compensation may be in a partially orthogonal relationship, where the redundant signals and the reference signals are respectively real signals and imaginary signals, to reduce interference between the reference signals. This further reduces a PAPR of the signals, and further improves signal transmission performance.

Further, the first pilot pattern may also indirectly indicate the time domain position of the reference signals by using position indexes, or may directly indicate the time domain positions of the reference signals by using specific time domain positions. For example, the position indexes are used for indication. The first pilot pattern may include a sixth position index and a seventh position index, and may further include an eighth position index and a ninth position index. The sixth time domain position may indicate the sixth time domain position, the seventh time domain position may indicate the seventh time domain position, the eighth position index may indicate the eighth time domain position, and the ninth position index may indicate the ninth time domain position. Time domain sequence numbers of the sixth position index and the eighth position index may be consecutive, time domain sequence numbers of the eighth position index and the seventh position index may be consecutive, and time domain sequence numbers of the seventh position index and the ninth position index may be consecutive. To be specific, the time domain sequence numbers of the sixth position index, the eighth position index, the seventh position index, and the ninth position index are successively consecutive, and the time domain positions indicated by the sixth position index, the eighth position index, the seventh position index, and the ninth position index are successively adjacent. To be specific, the time domain position of the twelfth reference signal is adjacent to the time domain positions of the tenth reference signal and the eleventh reference signal, and the time domain position of the thirteenth reference signal is adjacent to the time domain position of the eleventh reference signal, that is, the time domain position of the redundant signal is adjacent to the time domain position of the interfered reference signal. In this case, it may be ensured that interference caused by the redundant signal to the interfered reference signal is strong enough, to ensure accuracy of the phase noise compensation.

Further, that the network device sends a first pilot pattern of the first terminal may be sending at least one of the following that carries the first pilot pattern: DCI, a MAC-CE, RRC signaling, or any other possible message. This is not limited in this application. Correspondingly, that the first terminal obtains the pilot pattern corresponding to the first terminal may be receiving, from the network device, at least one of the following: the DCI, the MAC-CE, or the RRC signaling, to obtain the first pilot pattern of the first terminal. Alternatively, the first pilot pattern of the first terminal may be preconfigured locally, so that the first pilot pattern is directly obtained locally.

It should be understood that in a user scenario, the network device may further send a second pilot pattern of a second terminal to the second terminal. Correspondingly, the second terminal may also obtain the second pilot pattern of the second terminal. For a specific implementation of the second pilot pattern of the second terminal, refer to the related descriptions of the ith terminal. Details are not described herein again.

For ease of understanding, the UE 1 and the UE 2 are still used as an example below for description.

Example 3: FIG. 20 shows pilot patterns corresponding to the UE 1 and the UE 2. As shown in a in FIG. 20, the pilot pattern of the UE 1 indicates: Q1 (the first reference signal), Q2 (the second reference signal), Q3 (the fifth reference signal), and Q4 (the sixth reference signal), where Q1 to Q4 are consecutively placed at time domain positions, Q1 and Q3 are consecutively placed at real signal positions, and Q2 and Q4 are consecutively placed at imaginary signal positions. As shown in b in FIG. 20, the pilot pattern of the UE 2 indicates Q10 (the tenth reference signal), Q12 (the eleventh reference signal), Q11 (the twelfth reference signal), and Q13 (the thirteenth reference signal), where Q10 to Q13 are consecutively placed at the time domain positions, Q10 and Q12 are consecutively placed at real signal positions, and Q11 and Q13 are consecutively placed at imaginary signal positions.

The UE 1 determines, based on the pilot pattern of the UE 1 and a first precoding sequence [1, 1], a signal S1 that needs to be transmitted by the UE 1 at the time domain position (or the fourth time domain position) of Q1, and the signal S3 that needs to be transmitted at the time domain position (or the first time domain position) of Q3. For a specific implementation, refer to the related descriptions in the foregoing first implementation. Details are not described herein again.

In addition, the UE 2 determines, based on the pilot pattern of the UE 2 and the rule indicated by the first pilot pattern, a signal S10 that needs to be transmitted by the UE 2 at the time domain position (or the fourth time domain position) of Q5, and a signal S12 that needs to be transmitted at a time domain position (or the first time domain position) of Q7. The signal S10 may be shown in the formula 21, and the signal S12 may be shown in the formula 22:

$$S10=Q10+a7*jQ11+a8*jQ13 \quad (21);$$

and

$$S12=Q12+b7*jQ11+b8*jQ13 \quad (22).$$

a7*jQ11 is interference caused by Q11 to Q10, a8*jQ13 is interference caused by Q13 to Q10, b7*jQ11 is interference caused by Q11 to Q12, and b8*jQ13 is interference caused by Q13 to Q12. a7*jQ11+a8*jQ13=InT10 and b7*jQ11+b8*jQ13= InT12 are set. The formulas 21 and 22 may be represented as the formulas 23 and 24:

$$S10=Q10+ InT10 \quad (23);$$

and

$$S12=Q12+ InT12 \quad (24).$$

It should be understood that, Q10=-Q12 is modulated to meet a requirement of multi-user phase noise compensation. For a specific implementation principle, refer to the related descriptions in S1902. In addition, Q11 and Q13 are modulated, so that InT10=InT12, to meet a requirement of energy minimization. That is, a PAPR of S 10 and S 12 is low.

S1902: The first terminal sends a first signal to the network device, and the network device receives the first signal from the first terminal.

The first terminal may modulate the first signal, for example, the signal S10 and the signal S12, and send the first signal to the network device. Optionally, the second terminal may modulate a second signal, for example, the signal S1 and the signal S3, and send the second signal to the network device. For a specific implementation, refer to the foregoing related descriptions of SC-OQAM. Details are not described herein again. Correspondingly, the network device may receive and demodulate the first signal of the first terminal, and optionally, may further receive and demodulate the second signal of the second terminal. For a specific implementation, refer to the foregoing related descriptions of SC-OQAM. Details are not described herein again.

It should be understood that the first signal and the second signal are interfered with by phase noise in a transmission process, so that a signal obtained by the network device through demodulation also carries the phase noise. In this case, the network device may subtract the signals to determine phase noise of the first terminal, and determine phase noise of the second terminal based on the phase noise of the first terminal, to implement the multi-user phase noise compensation.

For ease of understanding, the UE 1 and the UE 2 are still used as an example below for description.

Example 3: If the UE 1 sequentially sends the signal S1 and the signal S3 to a base station, and the UE 2 sends the signal S10 and the signal S12 to the base station, the base station may receive a signal S110 and a signal S312. S13 may be shown in the formula 25, and S14 may be shown in the formula 26:

$$S110=(Q1+InT1)*exp(1i*\Theta1)+(Q10+InT10)*exp(1i*\Theta2) \quad (25);$$

and

$$S312=(Q3+InT3)*exp(1i*\Theta1)+(Q12+InT12)*exp(1i*\Theta2) \quad (26).$$

exp(1i*Θ1) is phase noise of the UE 1, and exp(1i*Θ2) is phase noise of the UE 2. If S312 is subtracted from S110, S110-S312 may be shown in the formula 27:

$$S110-S312=(Q1-Q3+InT1-InT3)*exp(1i*\Theta1)+(Q10-Q12+InT10-InT12)*exp(1i*\Theta2) \quad (27).$$

Because Q1=Q3, InT1=InT3, Q10=-Q12, and InT10=InT12, the formula 27 may be further represented as the formula 28:

$$S110-S312= 2Q10*exp(1i*\Theta2) \quad (28).$$

In this way, the base station may determine the phase noise exp(1i*Θ2) of the UE 2 based on the formula 28, and determine the phase noise exp(1i*Θ1) of the UE 1 based on exp(1i*Θ2) and the formula 25 or 26, to implement the multi-user phase noise compensation.

In conclusion, it may be learned from the signal transmission method shown in FIG. 19 that the polarity of the tenth reference signal is opposite to that of the eleventh reference signal. A condition required for multi-user phase noise compensation may be met, so that the multi-user phase noise compensation may be implemented. On this basis, the polarity of the fifth interfering signal is the same as that of the sixth interfering signal, and a condition required for energy minimization may be met, so that energy required for modulating the tenth reference signal and the eleventh reference signal is the smallest. In this case, while the multi-user phase noise compensation is implemented, the PAPR of the signals is reduced, and the signal transmission performance is improved.

For example, FIG. 21 is a schematic diagram 3 of a signal transmission method according to an embodiment of this application. The signal transmission method may be applicable to communication between any two nodes shown in FIG. 15, for example, between a terminal (for example, the first terminal) and the network device. As shown in FIG. 21, the signal transmission method includes the following steps.

S2101: The network device sends first information. Correspondingly, the terminal obtains the first information.

The first information indicates the terminal to use a first pilot pattern or a second pilot pattern, and may be carried in at least one of the following: DCI, a MAC-CE, RRC signaling, or any other possible message. This is not limited in this application. In an implementation, the first information may include a first precoding sequence or a second precoding sequence. The first precoding sequence corresponds to the first pilot pattern, and the second precoding sequence corresponds to the second pilot pattern, so that the terminal may determine, based on a precoding sequence in the first information, a pilot pattern used to send a signal. No additional signaling indication is required. Therefore, signaling overheads may be reduced, and communication efficiency may be improved. In another implementation, the first information may indicate a first mode (type1) or a second mode (type2). The first mode may indicate the terminal to use the first pilot pattern, and the second mode may indicate the terminal to use the second pilot pattern. In this case, the terminal may determine, based on a mode indicated in the first information, a pilot pattern used to send a signal. No additional signaling indication is required. Therefore, signaling overheads may be reduced, and communication efficiency may be improved. The first mode may also be replaced by another name, for example, a first pilot mode, a first sending mode, and a first working mode. Similarly, the second mode may also be replaced by another name, for example, a second pilot mode, a second sending mode, and a second working mode. This is not limited in this application.

The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position, and a value corresponding to the first reference signal in the first precoding sequence is opposite to a value corresponding to the third reference signal in the second precoding sequence. It should be noted that, for specific implementations of the first pilot pattern and the second pilot pattern, refer to the related descriptions in S1601. Details are not described again.

S2102: The terminal sends a signal corresponding to the first pilot pattern or the second pilot pattern. Correspondingly, the network device receives the signal corresponding to the first pilot pattern or the second pilot pattern.

It may be learned from the related descriptions in S2101 that the terminal may determine, based on the precoding sequence in the first information or the mode indicated by the first information, to use the first pilot pattern or the second pilot pattern. In this way, the terminal may send, based on the first pilot pattern, the signal corresponding to the first pilot pattern, or send, based on the second pilot pattern, the signal corresponding to the second pilot pattern. For a specific implementation, refer to the related descriptions in S1602. Details are not described again.

It may be learned from the method shown in FIG. 21 that, because there are a plurality of pilot patterns, for example, including the first pilot pattern or the second pilot pattern, in a multi-user scenario, the terminal may select to use a corresponding pilot pattern to send a signal. For example, when a terminal has selected the first pilot pattern and the first precoding sequence to send a signal, another terminal may select the second pilot pattern and the second precoding sequence to send a signal. In this case, because the value corresponding to the first reference signal in the first precoding sequence is opposite to the value corresponding to the third reference signal in the second precoding sequence, a condition required for multi-user phase noise compensation may be met, so that the multi-user phase noise compensation may be implemented. In addition, because time domain intervals between reference signals in the first pilot pattern or the second pilot pattern are different, for example, the time domain interval between the first time domain position and the second time domain position is greater than the time domain interval between the first time domain position and the third time domain position, or the time domain interval between the first time domain position and the third time domain position is greater than the time domain interval between the first time domain position and the second time domain position, so that interference caused by the second reference signal to the first reference signal can be reduced, or interference caused by the fourth reference signal to the third reference signal can be reduced. In this way, energy required for modulating the first reference signal or the third reference signal is reduced. While the multi-user phase noise compensation is implemented, a PAPR of the signals is reduced, and signal transmission performance is improved, to achieve a larger coverage area and smaller distortion.

Optionally, with reference to the foregoing embodiments, in a first possible design solution, before S2101, the method may further include: Step 1: The network device sends second information. Correspondingly, the terminal obtains the second information.

The second information may be carried in at least one of the following: DCI, a MAC-CE, RRC signaling, or any other possible message. This is not limited in this application.

In a possible implementation, the second information may include the correspondence (denoted as a correspondence 1) between the first precoding sequence and the first pilot pattern, and/or the correspondence (denoted as a correspondence 2) between the second precoding sequence and the second pilot pattern. The correspondence 1 may be a correspondence between one or more of the following items of the first precoding sequence: an index, an identifier, or the first precoding sequence, and one or more of the following items of the first pilot pattern: an index, an identifier, or the first pilot pattern. Similarly, the correspondence 2 may be a correspondence between one or more of the following items of the second precoding sequence: an index, an identifier, or the second precoding sequence, and one or more of the following items of the second pilot pattern: an index, an identifier, or the second pilot pattern. This is not limited in this application. In this case, when receiving the first information, the terminal can accurately determine, based on the correspondences between the precoding sequences and the pilot patterns, a pilot pattern that the terminal needs to use.

In another possible implementation, the second information may include a correspondence (denoted as a correspondence 3) between the first mode and the first pilot pattern, and/or a correspondence (denoted as a correspondence 4) between the second mode and the second pilot pattern. The correspondence 3 may be a correspondence between one or more of the following items of the first mode: an index, an identifier, or the first mode, and one or more of the following items of the first pilot pattern: an index, an identifier, or the first pilot pattern. Similarly, the correspondence 4 may be a correspondence between one or more of the following items of the second mode: an index, an identifier, or the second mode, and one or more of the following items of the second pilot pattern: an index, an identifier, or the second pilot pattern. This is not limited in this application. In this case, when receiving the first information, the terminal can accurately determine, based on the correspondences between the modes and the pilot patterns, a pilot pattern that the terminal needs to use.

It may be understood that, if the correspondence includes the first pilot pattern and/or the second pilot pattern, it indicates that the first information further includes the first pilot pattern and/or the second pilot pattern, to implement signaling multiplexing and improve communication efficiency.

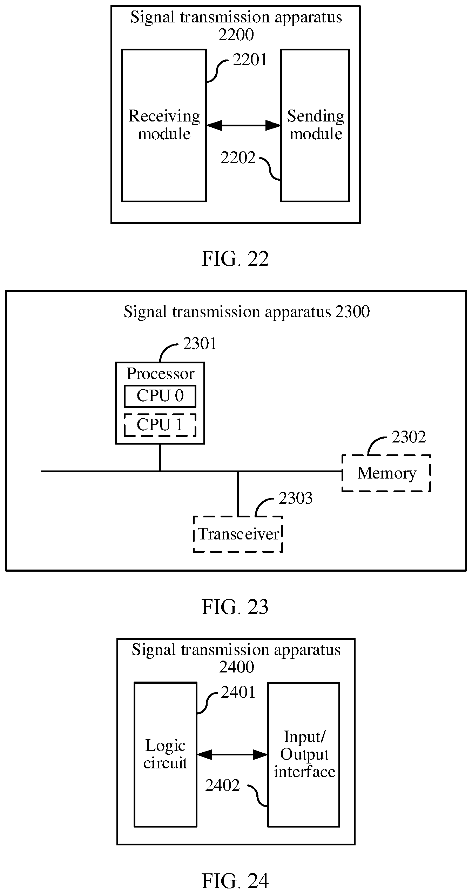

The signal transmission method provided in embodiments of this application is described in detail above with reference to FIG. 16 to FIG. 21. A signal transmission apparatus configured to perform the signal transmission method provided in embodiments of this application is described in detail below with reference to FIG. 22 to FIG. 24.

For example, FIG. 22 is a schematic diagram 1 of a structure of a signal transmission apparatus according to an embodiment of this application. As shown in FIG. 22, the signal transmission apparatus 2200 includes a receiving module 2201 and a sending module 2202. For ease of description, FIG. 22 shows only main parts of the signal transmission apparatus.

In a first embodiment, the signal transmission apparatus 2200 may be applicable to the communication system shown in FIG. 15, and perform a function of the terminal set in the method shown in FIG. 16.

The receiving module 2201 is configured to obtain a pilot pattern corresponding to the signal transmission apparatus 2200.

The sending module 2202 is configured to send, to a network device, signals corresponding to the terminal set.

The signal transmission apparatus 2200 includes M terminals, where M is an integer greater than 1. In the M terminals, a pilot pattern of the $i^{th}$ terminal indicates that a first reference signal is located at a first time domain position, and a second reference signal is located at a second time domain position. In the M terminals, a pilot pattern of the $j^{th}$ terminal indicates that a third reference signal is located at the first time domain position, and a fourth reference signal is located at a third time domain position, i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the second reference signal in a second precoding sequence. A signal of the $i^{th}$ terminal is determined based on the pilot pattern of the $i^{th}$ terminal, and a signal of the $j^{th}$ terminal is determined based on the pilot pattern of the $j^{th}$ terminal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

In a possible design solution, the pilot pattern of the jth terminal may include a first position index, a second position index, a third position index, a fourth position index, and a fifth position index. The pilot pattern of the ith terminal may include the first position index, the second position index, the fourth position index, and the fifth position index.

In another possible design solution, the pilot pattern of the jth terminal may include a first position index, a third position index, a fourth position index, and a fifth position index. The pilot pattern of the ith terminal may include the first position index, a second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the terminal set in the method shown in FIG. 16.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that the signal transmission apparatus 2200 may be a terminal set, may be a chip (system) or another part or component that may be disposed in the terminal set, or may be an apparatus including the terminal set. This is not limited in this application.

In addition, for a technical effect of the signal transmission apparatus 2200, refer to a technical effect corresponding to the terminal set in the method shown in FIG. 16. Details are not described herein again.

In a second embodiment, the signal transmission apparatus 2200 may be applicable to the communication system shown in FIG. 15, and perform a function of the network device in the method shown in FIG. 16.

The sending module 2202 is configured to send pilot patterns corresponding to the M terminals.

The receiving module 2201 is configured to receive signals corresponding to M terminals.

M is an integer greater than 1. In the M terminals, a pilot pattern of the ith terminal indicates that a first reference signal is located at a first time domain position, and a second reference signal is located at a second time domain position. In the M terminals, a pilot pattern of the jth terminal indicates that a third reference signal is located at the first time domain position, and a fourth reference signal is located at a third time domain position, i and j are integers ranging from 1 to M. A time domain interval between the first time domain position and the second time domain position is less than or greater than a time domain interval between the first time domain position and the third time domain position. A value corresponding to the first reference signal in a first precoding sequence is opposite to a value corresponding to the second reference signal in a second precoding sequence. A signal of the ith terminal is determined based on the pilot pattern of the ith terminal, and a signal of the jth terminal is determined based on the pilot pattern of the jth terminal.

In a possible design solution, the pilot pattern of the ith terminal may further indicate that a fifth reference signal is located at a fourth time domain position, and a sixth reference signal is located at a fifth time domain position. The pilot pattern of the jth terminal may further indicate that a seventh reference signal is located at the fourth time domain position, an eighth reference signal is located at the fifth time domain position, and a ninth reference signal is located at the second time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal, the eighth reference signal, and the ninth reference signal for the third reference signal. The fourth interfering signal may include interfering signals generated by the fourth reference signal, the eighth reference signal, and the ninth reference signal for the seventh reference signal.

In a possible design solution, the pilot pattern of the $i^{th}$ terminal may further indicate that a fifth reference signal is located at a fourth time domain position, and a sixth reference signal is located at a fifth time domain position. The pilot pattern of the $j^{th}$ terminal may further indicate that a seventh reference signal is located at the fourth time domain position, and an eighth reference signal is located at the fifth time domain position. In addition, in the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal may include interfering signals generated by the second reference signal and the sixth reference signal for the first reference signal. The second interfering signal may include interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal may include interfering signals generated by the fourth reference signal and the eighth reference signal for the third reference signal. The fourth interfering signal may include interfering signals generated by the fourth reference signal and the eighth reference signal for the seventh reference signal.

In a possible design solution, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

In a possible design solution, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

In a possible design solution, the pilot pattern of the $j^{th}$ terminal may include a first position index, a second position index, a third position index, a fourth position index, and a fifth position index. The pilot pattern of the $i^{th}$ terminal may include the first position index, the second position index, the fourth position index, and the fifth position index.

In another possible design solution, the pilot pattern of the $j^{th}$ terminal may include a first position index, a third position index, a fourth position index, and a fifth position index. The pilot pattern of the $i^{th}$ terminal may include the first position index, a second position index, the fourth position index, and the fifth position index.

The first position index may indicate the first time domain position, the second position index may indicate the second time domain position, the third position index may indicate the third time domain position, the fourth position index may indicate the fourth time domain position, and the fifth position index indicates the fifth time domain position. In addition, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the network device in the method shown in FIG. 16.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that, the signal transmission apparatus 2200 may be a network device, may be a chip (system) or another part or component that may be disposed in the network device, or may be an apparatus including the network device. This is not limited in this application.

In addition, for a technical effect of the signal transmission apparatus 2200, refer to a technical effect corresponding to the network device in the method shown in FIG. 16. Details are not described herein again.

In a third embodiment, the signal transmission apparatus 2200 may be applicable to the communication system shown in FIG. 15, and perform a function of the network terminal in the method shown in FIG. 19.

The sending module 2202 is configured to send a first pilot pattern of a first terminal. The receiving module 2201 is configured to receive a first signal from the first terminal. A polarity of a tenth reference signal indicated by the first pilot pattern is opposite to that of an eleventh reference signal indicated by a third pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

In a possible design solution, an amplitude of the tenth reference signal may be the same as that of the eleventh reference signal.

In a possible design solution, an amplitude of the fifth interfering signal may be the same as that of the sixth interfering signal.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions.

Optionally, the first pilot pattern may include a sixth position index and a seventh position index, the sixth time domain position indicates the sixth time domain position, and the seventh time domain position indicates the seventh time domain position.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions.

Further, the first pilot pattern includes an eighth position index and a ninth position index, the eighth position index indicates the eighth time domain position, and the ninth position index indicates the ninth time domain position.

Further, time domain sequence numbers of the sixth position index and the eighth position index are consecutive, time domain sequence numbers of the eighth position index and the seventh position index are consecutive, and time domain sequence numbers of the seventh position index and the ninth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the network device in the method shown in FIG. 19.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that, the signal transmission apparatus 2200 may be a network device, may be a chip (system) or another part or component that may be disposed in the network device, or may be an apparatus including the network device. This is not limited in this application.

In addition, for a technical effect of the signal transmission apparatus 2200, refer to a technical effect corresponding to the network device in the method shown in FIG. 19. Details are not described herein again.

In a fourth embodiment, the signal transmission apparatus 2200 may be applicable to the communication system shown in FIG. 15, and perform a function of the first terminal in the method shown in FIG. 19.

The receiving module 2201 is configured to obtain a first pilot pattern of the signal transmission apparatus 2200.

The sending module 2202 is configured to send a first signal to a network device. A polarity of a tenth reference signal indicated by the first pilot pattern is opposite to that of an eleventh reference signal indicated by a third pilot pattern. A polarity of a fifth interfering signal of the tenth reference signal is the same as that of a sixth interfering signal of the eleventh reference signal. The fifth interfering signal includes interfering signals generated by a plurality of reference signals indicated by the first pilot pattern for the tenth reference signal, and the sixth interfering signal includes interfering signals generated by the plurality of reference signals indicated by the first pilot pattern for the eleventh reference signal. The first signal is determined based on the first pilot pattern.

In a possible design solution, an amplitude of the tenth reference signal may be the same as that of the eleventh reference signal.

In a possible design solution, an amplitude of the fifth interfering signal may be the same as that of the sixth interfering signal.

In a possible design solution, the first pilot pattern may indicate that the tenth reference signal is located at a sixth time domain position, and the eleventh reference signal is located at a seventh time domain position. The sixth time domain position and the seventh time domain position may be real signal positions, or the sixth time domain position and the seventh time domain position may be imaginary signal positions.

Optionally, the first pilot pattern may include a sixth position index and a seventh position index, the sixth time domain position indicates the sixth time domain position, and the seventh time domain position indicates the seventh time domain position.

Optionally, the plurality of reference signal may include a twelfth reference signal and a thirteenth reference signal. The first pilot pattern further indicates that the twelfth reference signal is located at an eighth time domain position, and the thirteenth reference signal is located at a ninth time domain position. If the sixth time domain position and the seventh time domain position are real signal positions, the eighth time domain position and the ninth time domain position are imaginary signal positions; or if the sixth time domain position and the seventh time domain position are imaginary signal positions, the eighth time domain position and the ninth time domain position are real signal positions.

Further, the first pilot pattern includes an eighth position index and a ninth position index, the eighth position index indicates the eighth time domain position, and the ninth position index indicates the ninth time domain position.

Further, time domain sequence numbers of the sixth position index and the eighth position index are consecutive, time domain sequence numbers of the eighth position index and the seventh position index are consecutive, and time domain sequence numbers of the seventh position index and the ninth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the first terminal in the method shown in FIG. 19.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that, the signal transmission apparatus 2200 may be a terminal device, for example, a first terminal, may be a chip (system) or another part or component that may be disposed in the terminal device, or may be an apparatus including the terminal device. This is not limited in this application.

In addition, for a technical effect of the signal transmission apparatus 2200, refer to a technical effect corresponding to the first terminal in the method shown in FIG. 19. Details are not described herein again.

In a fifth embodiment, the signal transmission apparatus 2200 may be applicable to the communication system shown in FIG. 15, and perform a function of the terminal in the method shown in FIG. 20.

The receiving module 2201 is configured to obtain first information. The sending module 2202 is configured to send a signal corresponding to a first pilot pattern or a second pilot pattern. The first information indicates the signal transmission apparatus 2200 to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

In a possible design solution, the first information includes the first precoding sequence or the second precoding sequence. The first precoding sequence corresponds to the first pilot pattern, and the second precoding sequence corresponds to the second pilot pattern.

Optionally, the receiving module 2201 is further configured to obtain second information before obtaining the first information. The second information includes the correspondence between the first precoding sequence and the first pilot pattern and/or the correspondence between the second precoding sequence and the second pilot pattern.

In a possible design solution, the first information may indicate a first mode or a second mode, the first mode may indicate the signal transmission apparatus 2200 to use the first pilot pattern, and the second mode may indicate the signal transmission apparatus 2200 to use the second pilot pattern.

Optionally, the receiving module 2201 is further configured to obtain second information before obtaining the first information. The second information includes a correspondence between the first mode and the first pilot pattern and/or a correspondence between the second mode and the second pilot pattern.

In a possible design solution, the first information may further include the first pilot pattern and/or the second pilot pattern.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position and the second time domain position and the third time domain position are imaginary signal positions, or the first time domain position is an imaginary signal position and the second time domain position and the third time domain position are real signal positions. The fourth time domain position is a real signal position and the fifth time domain position is an imaginary signal position, or the fourth time domain position is an imaginary signal position and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index may indicate the first time domain position, the second position index may indicate the second time domain position, the third position index may indicate the third time domain position, the fourth position index may indicate the fourth time domain position, and the fifth position index may indicate the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the terminal in the method shown in FIG. 20.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that the signal transmission apparatus 2200 may be a terminal, may be a chip (system) or another part or component that may be disposed in the terminal, or may be an apparatus including the terminal. This is not limited in this application.

In addition, for a technical effect of the signal transmission apparatus 2200, refer to a technical effect corresponding to the terminal in the method shown in FIG. 20. Details are not described herein again.

In a sixth embodiment, the signal transmission apparatus 2200 may be applicable to the communication system shown in FIG. 15, and perform a function of the network device in the method shown in FIG. 20.

The sending module 2202 is configured to send first information. The receiving module 2201 is configured to receive a signal corresponding to a first pilot pattern or a second pilot pattern. The first information indicates a terminal to use the first pilot pattern or the second pilot pattern. The first pilot pattern indicates that a first reference signal is located at a first time domain position, and a second reference signal is located at a second time domain position. The second pilot pattern indicates that a third reference signal is located at the first time domain position, and a fourth reference signal is located at a third time domain position. A time domain interval between the first time domain position and the second time domain position is less than or greater than a time domain interval between the first time domain position and the third time domain position. A value corresponding to the first reference signal in a first precoding sequence is opposite to a value corresponding to the third reference signal in a second precoding sequence.

In a possible design solution, the first information may include the first precoding sequence or the second precoding sequence. The first precoding sequence corresponds to the first pilot pattern, and the second precoding sequence corresponds to the second pilot pattern.

Optionally, the sending module 2201 is further configured to send second information before sending the first information. The second information includes the correspondence between the first precoding sequence and the first pilot pattern and/or the correspondence between the second precoding sequence and the second pilot pattern.

In a possible design solution, the first information may indicate a first mode or a second mode. The first mode may indicate the terminal to use the first pilot pattern, and the second mode may indicate the terminal to use the second pilot pattern.

Optionally, the sending module 2201 is further configured to send second information before sending the first information. The second information includes a correspondence between the first mode and the first pilot pattern and/or a correspondence between the second mode and the second pilot pattern.

In a possible design solution, the first information may further include the first pilot pattern and/or the second pilot pattern.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, an eighth reference signal is located at the fifth time domain position, and a ninth reference signal is located at the second time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal, the eighth reference signal, and the ninth reference signal for the third reference signal, and the fourth interfering signal includes interfering signals generated by the fourth reference signal, the eighth reference signal, and the ninth reference signal for the seventh reference signal.

In a possible design solution, the first pilot pattern may further indicate that a fifth reference signal is located at a fourth time domain position, and a sixth reference signal is located at a fifth time domain position. The second pilot pattern may further indicate that a seventh reference signal is located at the fourth time domain position, and an eighth reference signal is located at the fifth time domain position. In the first precoding sequence, the value corresponding to the first reference signal is the same as a value corresponding to the fifth reference signal. In the second precoding sequence, the value corresponding to the third reference signal is opposite to a value corresponding to the seventh reference signal.

Optionally, the first reference signal and the third reference signal that are modulated by using the first precoding sequence may meet the following relationship: a polarity of the first reference signal is the same as that of the fifth reference signal, and a polarity of a first interfering signal of the first reference signal is the same as that of a second interfering signal of the fifth reference signal. The first interfering signal includes interfering signals generated by the second reference signal and the sixth reference signal for the first reference signal, and the second interfering signal includes interfering signals generated by the second reference signal and the sixth reference signal for the fifth reference signal. The third reference signal and the seventh reference signal that are modulated by using the second precoding sequence may meet the following relationship: a polarity of the third reference signal is opposite to that of the seventh reference signal, and a polarity of a third interfering signal of the third reference signal is opposite to that of a fourth interfering signal of the seventh reference signal. The third interfering signal includes interfering signals generated by the fourth reference signal and the eighth reference signal for the third reference signal, and the fourth interfering signal includes interfering signals generated by the fourth reference signal and the eighth reference signal for the seventh reference signal.

Optionally, an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

Optionally, the first time domain position is a real signal position, and the second time domain position and the third time domain position are imaginary signal positions. Alternatively, the first time domain position is an imaginary signal position, and the second time domain position and the third time domain position are real signal positions. The fourth time domain position is a real signal position, and the fifth time domain position is an imaginary signal position. Alternatively, the fourth time domain position is an imaginary signal position, and the fifth time domain position is a real signal position.

Optionally, the second pilot pattern may include a first position index, a second position index, a third position index, a fourth position index, and a fifth position index. The first pilot pattern may include the first position index, the second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the second pilot pattern may include a first position index, a third position index, a fourth position index, and a fifth position index. The first pilot pattern may include the first position index, a second position index, the fourth position index, and the fifth position index. The first position index indicates the first time domain position, the second position index indicates the second time domain position, the third position index indicates the third time domain position, the fourth position index indicates the fourth time domain position, and the fifth position index indicates the fifth time domain position. Time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

Optionally, the sending module 2202 and the receiving module 2201 may alternatively be integrated into one module, for example, a transceiver module (not shown in FIG. 22). The transceiver module is configured to implement a sending function and a receiving function of the signal transmission apparatus 2200.

Optionally, the signal transmission apparatus 2200 may further include a processing module (not shown in FIG. 22). The processing module is configured to implement a processing function of the signal transmission apparatus 2200.

Optionally, the signal transmission apparatus 2200 may further include a storage module (not shown in FIG. 22). The storage module stores a program or instructions. When the processing module executes the program or the instructions, the signal transmission apparatus 2200 may perform a function of the network device in the method shown in FIG. 20.

It should be understood that the processing module in the signal transmission apparatus 2200 may be implemented by a processor or a circuit component related to the processor, and may be a processor or a processing unit. The transceiver module may be implemented by a transceiver or a circuit component related to the transceiver, or may be a transceiver or a transceiver unit.

It should be noted that, the signal transmission apparatus 2200 may be a network device, may be a chip (system) or another part or component that may be disposed in the network device, or may be an apparatus including the network device. This is not limited in this application.

In addition, for a technical effect of the signal transmission apparatus 2200, refer to a technical effect corresponding to the network device in the method shown in FIG. 20. Details are not described herein again.

For example, FIG. 23 is a schematic diagram 2 of a structure of a signal transmission apparatus according to an embodiment of this application. The signal transmission apparatus may be a terminal device or a network device, or may be a chip (system) or another part or component that may be disposed in the terminal device or the network device. As shown in FIG. 23, the signal transmission apparatus 2300 may include a processor 2301. Optionally, the signal transmission apparatus 2300 may further include a memory 2302 and/or a transceiver 2303. The processor 2301 is coupled to the memory 2302 and the transceiver 2303, for example, may be connected to the memory 2302 and the transceiver 2303 through a communication bus.

The following describes the parts of the signal transmission apparatus 2300 in detail with reference to FIG. 23.

The processor 2301 is a control center of the signal transmission apparatus 2300, and may be a processor or may be a general term of a plurality of processing elements. For example, the processor 2301 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 2301 may perform various functions of the signal transmission apparatus 2300 by running or executing a software program stored in the memory 2302 and invoking data stored in the memory 2302.

During specific implementation, in an embodiment, the processor 2301 may include one or more CPUs, for example, a CPU 0 and a CPU 1 in FIG. 23.

During specific implementation, in an embodiment, the signal transmission apparatus 2300 may further include a plurality of processors. Each of the processors may be a single-core processor (single-CPU) or may be a multi-core processor (multi-CPU). The processor herein may refer to one or more devices, circuits, and/or processing cores configured to process data (for example, computer program instructions).

The memory 2302 is configured to store a software program for executing the solutions in this application, and the processor 2301 controls the execution. For a specific implementation, refer to the foregoing method embodiments. Details are not described herein again.

Optionally, the memory 2302 may be a read-only memory (read-only memory, ROM), another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, any other medium that can be used to carry or store expected program code in a form of an instruction or a data structure and that can be accessed by a computer. The memory 2302 is not limited thereto. The memory 2302 may be integrated with the processor 2301, or may exist independently, and is coupled to the processor 2301 by using an interface circuit (not shown in FIG. 23) of the signal transmission apparatus 2300. This is not specifically limited in this embodiment of this application.

The transceiver 2303 is configured to communicate with another signal transmission apparatus. For example, the signal transmission apparatus 2300 is a terminal device, and the transceiver 2303 may be configured to communicate with a network device or communicate with another terminal device. For another example, the signal transmission apparatus 2300 is a network device, and the transceiver 2303 may be configured to communicate with a terminal device or communicate with another network device.

Optionally, the transceiver 2303 may include a receiver and a transmitter (which are not separately shown in FIG. 23). The receiver is configured to implement a receiving function, and the transmitter is configured to implement a sending function.

Optionally, the transceiver 2303 may be integrated with the processor 2301, or may exist independently, and is coupled to the processor 2301 by using an interface circuit (not shown in FIG. 23) of the signal transmission apparatus 2300. This is not specifically limited in this embodiment of this application.

It should be noted that the structure of the signal transmission apparatus 2300 shown in FIG. 23 does not constitute a limitation on the signal transmission apparatus. An actual signal transmission apparatus may include more or fewer parts than those shown in the figure, or combine some parts, or have different part arrangements.

In addition, for a technical effect of the signal transmission apparatus 2300, refer to the technical effect of the signal transmission method in the foregoing method embodiments. Details are not described herein again.

For example, FIG. 24 is a schematic diagram 3 of a structure of a signal transmission apparatus according to an embodiment of this application. The signal transmission apparatus may be a terminal device or a network device, or may be a chip (system) or another part or component that may be disposed in the terminal device or the network device. As shown in FIG. 24, the signal transmission apparatus 2400 may include a logic circuit 2401 and an input/output interface 2402. The input/output interface 2402 is configured to receive code instructions and transmit the code instructions to the logic circuit 2401. The logic circuit 2401 is configured to run the code instructions to perform the foregoing method.

In addition, for a technical effect of the signal transmission apparatus 2400, refer to the technical effect of the signal transmission method in the foregoing method embodiments. Details are not described herein again.

An embodiment of this application provides a communication system. The communication system includes one or more terminal devices described above and one or more network devices.

It should be understood that, in embodiments of this application, the processor may be a central processing unit (central processing unit, CPU), or the processor may be another general purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general purpose processor may be a microprocessor, or the processor may be any conventional processor or the like.

It may be further understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or a part of the foregoing embodiments may be implemented by using software, hardware (for example, a circuit), firmware, or any combination thereof. When being implemented by using the software, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from the computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one (item) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in embodiments disclosed in this specification, units and algorithm steps may be implemented by using electronic hardware or a combination of computer software and the electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, may be located at one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to an existing technology, or all or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, wherein the method comprises:

    obtaining, by a terminal, first information, wherein the first information indicates the terminal to use a first pilot pattern or a second pilot pattern, the first pilot pattern indicates that a first reference signal is located at a first time domain position, and a second reference signal is located at a second time domain position; the second pilot pattern indicates that a third reference signal is located at the first time domain position, and a fourth reference signal is located at a third time domain position; a time domain interval between the first time domain position and the second time domain position is less than or greater than a time domain interval between the first time domain position and the third time domain position; and a value corresponding to the first reference signal in a first precoding sequence is opposite to a value corresponding to the third reference signal in a second precoding sequence; and
    sending, by the terminal, a signal corresponding to the first pilot pattern or the second pilot pattern.

2. The method according to claim 1, wherein the first information comprises the first precoding sequence or the second precoding sequence, the first precoding sequence corresponds to the first pilot pattern, and the second precoding sequence corresponds to the second pilot pattern.

3. The method according to claim 1, wherein the first information indicates a first mode or a second mode, the first mode indicates the terminal to use the first pilot pattern, and the second mode indicates the terminal to use the second pilot pattern.

4. The method according to any one of claims 1 to 3, wherein the first pilot pattern further indicates that a fifth reference signal is located at a fourth time domain position, and a sixth reference signal is located at a fifth time domain position; the second pilot pattern further indicates that a seventh reference signal is located at the fourth time domain position, an eighth reference signal is located at the fifth time domain position, and a ninth reference signal is located at the second time domain position; in the first precoding sequence, the value corresponding to the first reference signal is the same as a value corresponding to the fifth reference signal; and in the second precoding sequence, the value corresponding to the third reference signal is opposite to a value corresponding to the seventh reference signal.

5. The method according to claim 4, wherein the first reference signal and the third reference signal that are modulated by using the first precoding sequence meet the following relationship: a polarity of the first reference signal is the same as that of the fifth reference signal, and a polarity of a first interfering signal of the first reference signal is the same as that of a second interfering signal of the fifth reference signal; the first interfering signal comprises interfering signals generated by the second reference signal and the sixth reference signal for the first reference signal; and the second interfering signal comprises interfering signals generated by the second reference signal and the sixth reference signal for the fifth reference signal; and
    the third reference signal and the seventh reference signal that are modulated by using the second precoding sequence meet the following relationship: a polarity of the third reference signal is opposite to that of the seventh reference signal, and a polarity of a third interfering signal of the third reference signal is opposite to that of a fourth interfering signal of the seventh reference signal; the third interfering signal comprises interfering signals generated by the fourth reference signal, the eighth reference signal, and the ninth reference signal for the third reference signal; and the fourth interfering signal comprises interfering signals generated by the fourth reference signal, the eighth reference signal, and the ninth reference signal for the seventh reference signal.

6.  The method according to any one of claims 1 to 3, wherein the first pilot pattern further indicates that a fifth reference signal is located at a fourth time domain position, and a sixth reference signal is located at a fifth time domain position; the second pilot pattern further indicates that a seventh reference signal is located at the fourth time domain position, and an eighth reference signal is located at the fifth time domain position; in the first precoding sequence, the value corresponding to the first reference signal is the same as a value corresponding to the fifth reference signal; and in the second precoding sequence, the value corresponding to the third reference signal is opposite to a value corresponding to the seventh reference signal.

7.  The method according to claim 6, wherein the first reference signal and the third reference signal that are modulated by using the first precoding sequence meet the following relationship: a polarity of the first reference signal is the same as that of the fifth reference signal, and a polarity of a first interfering signal of the first reference signal is the same as that of a second interfering signal of the fifth reference signal; the first interfering signal comprises interfering signals generated by the second reference signal and the sixth reference signal for the first reference signal; and the second interfering signal comprises interfering signals generated by the second reference signal and the sixth reference signal for the fifth reference signal; and
    the third reference signal and the seventh reference signal that are modulated by using the second precoding sequence meet the following relationship: a polarity of the third reference signal is opposite to that of the seventh reference signal, and a polarity of a third interfering signal of the third reference signal is opposite to that of a fourth interfering signal of the seventh reference signal; the third interfering signal comprises interfering signals generated by the fourth reference signal and the eighth reference signal for the third reference signal; and the fourth interfering signal comprises interfering signals generated by the fourth reference signal and the eighth reference signal for the seventh reference signal.

8.  The method according to any one of claims 4 to 7, wherein an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

9.  The method according to any one of claims 4 to 8, wherein the first time domain position is a real signal position and the second time domain position and the third time domain position are imaginary signal positions, or the first time domain position is an imaginary signal position and the second time domain position and the third time domain position are real signal positions; and the fourth time domain position is a real signal position and the fifth time domain position is an imaginary signal position, or the fourth time domain position is an imaginary signal position and the fifth time domain position is a real signal position.

10. The method according to claim 4, 5, 8, or 9, wherein the second pilot pattern comprises a first position index, a second position index, a third position index, a fourth position index, and a fifth position index, and the first pilot pattern comprises the first position index, the second position index, the fourth position index, and the fifth position index, wherein the first position index indicates the first time domain position, the second position index indicates the second time domain position, the third position index indicates the third time domain position, the fourth position index indicates the fourth time domain position, the fifth position index indicates the fifth time domain position, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

11. The method according to claim 6 or 9, wherein the second pilot pattern comprises a first position index, a third position index, a fourth position index, and a fifth position index, and the first pilot pattern comprises the first position index, a second position index, the fourth position index, and the fifth position index, wherein the first position index indicates the first time domain position, the second position index indicates the second time domain position, the third position index indicates the third time domain position, the fourth position index indicates the fourth time domain position, the fifth position index indicates the fifth time domain position, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

12. A signal transmission method, wherein the method comprises:

sending, by a network device, first information, wherein the first information indicates a terminal to use a first pilot pattern or a second pilot pattern, the first pilot pattern indicates that a first reference signal is located at a first time domain position, and a second reference signal is located at a second time domain position; the second pilot pattern indicates that a third reference signal is located at the first time domain position, and a fourth reference signal is located at a third time domain position; a time domain interval between the first time domain position and the second time domain position is less than or greater than a time domain interval between the first time domain position and the third time domain position; and a value corresponding to the first reference signal in a first precoding sequence is opposite to a value corresponding to the third reference signal in a second precoding sequence; and

receiving, by the network device, a signal corresponding to the first pilot pattern or the second pilot pattern.

13. The method according to claim 12, wherein the first information comprises the first precoding sequence or the second precoding sequence, the first precoding sequence corresponds to the first pilot pattern, and the second precoding sequence corresponds to the second pilot pattern.

14. The method according to claim 12, wherein the first information indicates a first mode or a second mode, the first mode indicates the terminal to use the first pilot pattern, and the second mode indicates the terminal to use the second pilot pattern.

15. The method according to any one of claims 12 to 14, wherein the first pilot pattern further indicates that a fifth reference signal is located at a fourth time domain position, and a sixth reference signal is located at a fifth time domain position; the second pilot pattern further indicates that a seventh reference signal is located at the fourth time domain position, an eighth reference signal is located at the fifth time domain position, and a ninth reference signal is located at the second time domain position; in the first precoding sequence, the value corresponding to the first reference signal is the same as a value corresponding to the fifth reference signal; and in the second precoding sequence, the value corresponding to the third reference signal is opposite to a value corresponding to the seventh reference signal.

16. The method according to claim 15, wherein the first reference signal and the third reference signal that are modulated by using the first precoding sequence meet the following relationship: a polarity of the first reference signal is the same as that of the fifth reference signal, and a polarity of a first interfering signal of the first reference signal is the same as that of a second interfering signal of the fifth reference signal; the first interfering signal comprises interfering signals generated by the second reference signal and the sixth reference signal for the first reference signal; and the second interfering signal comprises interfering signals generated by the second reference signal and the sixth reference signal for the fifth reference signal; and

the third reference signal and the seventh reference signal that are modulated by using the second precoding sequence meet the following relationship: a polarity of the third reference signal is opposite to that of the seventh reference signal, and a polarity of a third interfering signal of the third reference signal is opposite to that of a fourth interfering signal of the seventh reference signal; the third interfering signal comprises interfering signals generated by the fourth reference signal, the eighth reference signal, and the ninth reference signal for the third reference signal; and the fourth interfering signal comprises interfering signals generated by the fourth reference signal, the eighth reference signal, and the ninth reference signal for the seventh reference signal.

17. The method according to any one of claims 12 to 14, wherein the first pilot pattern further indicates that a fifth reference signal is located at a fourth time domain position, and a sixth reference signal is located at a fifth time domain position; the second pilot pattern further indicates that a seventh reference signal is located at the fourth time domain position, and an eighth reference signal is located at the fifth time domain position; in the first precoding sequence, the value corresponding to the first reference signal is the same as a value corresponding to the fifth reference signal; and in the second precoding sequence, the value corresponding to the third reference signal is opposite to a value corresponding to the seventh reference signal.

18. The method according to claim 17, wherein the first reference signal and the third reference signal that are modulated by using the first precoding sequence meet the following relationship: a polarity of the first reference signal is the same as that of the fifth reference signal, and a polarity of a first interfering signal of the first reference signal is the same as that of a second interfering signal of the fifth reference signal; the first interfering signal comprises interfering signals generated by the second reference signal and the sixth reference signal for the first reference signal; and the second interfering signal comprises interfering signals generated by the second reference signal and the sixth reference signal for the fifth reference signal; and

the third reference signal and the seventh reference signal that are modulated by using the second precoding sequence meet the following relationship: a polarity of the third reference signal is opposite to that of the seventh reference signal, and a polarity of a third interfering signal of the third reference signal is opposite to that of a fourth interfering signal of the seventh reference signal; the third interfering signal comprises interfering signals generated by the fourth reference signal and the eighth reference signal for the third reference signal; and the fourth interfering signal comprises interfering signals generated by the fourth reference signal and the eighth reference signal for the seventh reference signal.

19. The method according to any one of claims 15 to 18, wherein an amplitude of the first reference signal is the same as that of the fifth reference signal, an amplitude of the second reference signal is the same as that of the sixth reference signal, an amplitude of the first interfering signal is the same as that of the second interfering signal, and an amplitude of the third interfering signal is the same as that of the fourth interfering signal.

20. The method according to any one of claims 12 to 19, wherein the first time domain position is a real signal position and the second time domain position and the third time domain position are imaginary signal positions, or the first time domain position is an imaginary signal position and the second time domain position and the third time domain position are real signal positions; and the fourth time domain position is a real signal position and the fifth time domain position is an imaginary signal position, or the fourth time domain position is an imaginary signal position and the fifth time domain position is a real signal position.

21. The method according to claim 15, 16, or 20, wherein the second pilot pattern comprises a first position index, a second position index, a third position index, a fourth position index, and a fifth position index, and the first pilot pattern comprises the first position index, the second position index, the fourth position index, and the fifth position index, wherein the first position index indicates the first time domain position, the second position index indicates the second time domain position, the third position index indicates the third time domain position, the fourth position index indicates the fourth time domain position, the fifth position index indicates the fifth time domain position, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

22. The method according to any one of claims 17 to 21, wherein the second pilot pattern comprises a first position index, a third position index, a fourth position index, and a fifth position index, and the first pilot pattern comprises the first position index, a second position index, the fourth position index, and the fifth position index, wherein the first position index indicates the first time domain position, the second position index indicates the second time domain position, the third position index indicates the third time domain position, the fourth position index indicates the fourth time domain position, the fifth position index indicates the fifth time domain position, time domain sequence numbers of the third position index and the fourth position index are consecutive, time domain sequence numbers of the fourth position index and the second position index are consecutive, time domain sequence numbers of the second position index and the first position index are consecutive, and time domain sequence numbers of the first position index and the fifth position index are consecutive.

23. A signal transmission apparatus, wherein the apparatus comprises a receiving module and a sending module, wherein

the receiving module is configured to obtain first information, wherein the first information indicates the signal transmission apparatus to use a first pilot pattern or a second pilot pattern, the first pilot pattern indicates that a first reference signal is located at a first time domain position, and a second reference signal is located at a second time domain position; the second pilot pattern indicates that a third reference signal is located at the first time domain position, and a fourth reference signal is located at a third time domain position; a time domain interval between the first time domain position and the second time domain position is less than or greater than a time domain interval between the first time domain position and the third time domain position; and a value corresponding to the first reference signal in a first precoding sequence is opposite to a value corresponding to the third reference signal in a second precoding sequence; and
the sending module is configured to send a signal corresponding to the first pilot pattern or the second pilot pattern.

24. The apparatus according to claim 23, wherein the first information comprises the first precoding sequence or the second precoding sequence, the first precoding sequence corresponds to the first pilot pattern, and the second precoding sequence corresponds to the second pilot pattern.

25. The apparatus according to claim 23, wherein the first information indicates a first mode or a second mode, the first mode indicates the signal transmission apparatus to use the first pilot pattern, and the second mode indicates the signal transmission apparatus to use the second pilot pattern.

26. A signal transmission apparatus, wherein the apparatus comprises a sending module and a receiving module, wherein

the sending module is configured to send first information, wherein the first information indicates a terminal to use a first pilot pattern or a second pilot pattern, the first pilot pattern indicates that a first reference signal is located at a first time domain position, and a second reference signal is located at a second time domain position; the second pilot pattern indicates that a third reference signal is located at the first time domain position, and a fourth reference signal is located at a third time domain position; a time domain interval between the first time domain position and the second time domain position is less than or greater than a time domain interval between the first time domain position and the third time domain position; and a value corresponding to the first reference signal in a first precoding sequence is opposite to a value corresponding to the third reference signal in a second precoding sequence; and
the receiving module is configured to receive a signal corresponding to the first pilot pattern or the second pilot pattern.

27. The apparatus according to claim 26, wherein the first information comprises the first precoding sequence or the second precoding sequence, the first precoding sequence corresponds to the first pilot pattern, and the second precoding sequence corresponds to the second pilot pattern.

28. The apparatus according to claim 26, wherein the first information indicates a first mode or a second mode, the first mode indicates the terminal to use the first pilot pattern, and the second mode indicates the terminal to use the second pilot pattern.

29. A signal transmission apparatus, wherein the signal transmission apparatus comprises a processor, wherein the processor is configured to perform the method according to any one of claims 1 to 11, or perform the method according to any one of claims 12 to 22.

30. A signal transmission apparatus, comprising a logic circuit and an input/output interface, wherein

the input/output interface is configured to receive code instructions and transmit the code instructions to the logic circuit; and
the logic circuit is configured to run the code instructions to perform the method according to any one of claims 1 to 11, or perform the method according to any one of claims 12 to 22.

31. A computer-readable storage medium, wherein the computer-readable storage medium comprises a computer program or instructions, and when the computer program or the instructions are run on a computer, the computer is enabled to perform the method according to any one of claims 1 to 11, or perform the method according to any one of claims 12 to 22.

32. A computer program product, wherein the computer program product comprises a computer program or instructions, and when the computer program or the instructions are run on a computer, the computer is enabled to perform the method according to any one of claims 1 to 11, or perform the method according to any one of claims 12 to 22.

FIG. 1

FIG. 2

First group of PTPSs+data | Second group of PTPSs+data | Third group of PTPSs+data | Fourth group of PTPSs+data

[1, 1] | [1, 1] | [1, 1] | [1, 1]

UE 1

First group of PTPSs+data | Second group of PTPSs+data | Third group of PTPSs+data | Fourth group of PTPSs+data

[1, −1] | [1, −1] | [1, −1] | [1, −1]

UE 2

FIG. 3

Amplitude

Zone L

Time domain position

FIG. 4

```
┌────────────┐      ┌─────────────┐      ┌─────────────┐                    ┌─────────────┐      ┌──────────────┐
│ Modulation │──┬──▶│ Real signal │─────▶│ Upsampling  │───────────────┬───▶│    Pulse    │─────▶│ Downsampling │
└────────────┘  │   └─────────────┘      └─────────────┘               │    │   shaping   │      └──────────────┘
                │                                                       │    └─────────────┘
                │   ┌─────────────┐      ┌─────────────┐      ┌─────────────┐
                └──▶│  Imaginary  │─────▶│ Upsampling  │─────▶│  Delay T/2  │
                    │   signal    │      └─────────────┘      └─────────────┘
                    └─────────────┘
```

FIG. 5

FIG. 6

```
┌────────────┐    ┌────────────┐    ┌────────────┐                      ┌────────────┐    ┌────────────────┐
│ Modulation │───►│ Real signal│───►│ Upsampling │─────────────────────►│DFT+upsampl │───►│   Truncated    │
│            │    │            │    │            │                      │    ing     │    │frequency domain│
└────────────┘    └────────────┘    └────────────┘                      └────────────┘    │   filtering    │
       │                                                                                   └────────────────┘
       │                                                                                            │
       ▼                                                                                            ▼
┌────────────┐    ┌────────────┐    ┌────────────┐                      ┌────────────┐    ┌────────────────┐
│ Imaginary  │───►│ Upsampling │───►│  Delay T/2 │                      │    IFFT    │◄───│Subcarrier mapping│
│  signal    │    │            │    │            │                      │            │    │                │
└────────────┘    └────────────┘    └────────────┘                      └────────────┘    └────────────────┘
```

a

```
┌──────┐    ┌────────────────┐    ┌────────────┐    ┌────────────┐    ┌────────────┐    ┌──────┐
│ FFT  │───►│Subcarrier mapping│─►│ Subcarrier │───►│  Channel   │───►│ Frequency  │───►│ IFFT │
│      │    │                │    │ demapping  │    │  removal   │    │  domain    │    │      │
└──────┘    └────────────────┘    └────────────┘    └────────────┘    │ filtering  │    └──────┘
                                                                       └────────────┘
```

b

FIG. 7

| Bandwidth is 100 | Bandwidth is 60 | Bandwidth is 60 |
|:---:|:---:|:---:|
| Frequency domain complex signal | Frequency domain filter | Frequency domain filter whose bandwidth is truncated |

Truncate

| | Frequency domain complex signal | |

FIG. 8

FIG. 9

FIG. 10

FIG. 11

FIG. 12

FIG. 13

FIG. 14

FIG. 15

Terminal set | Network device

S1601: Pilot patterns corresponding to the terminal set

S1602: Signals corresponding to the terminal set

FIG. 16

UE 1

Real signal position | Q1 | Q3 | Path i

Imaginary signal position | Q2 | Q4 | Path j

a

UE 2

Real signal position | Q5 | Q7 | Path i

Imaginary signal position | Q6 | | Q8 | Path j

b

FIG. 17

UE 1

Real signal position | Q1 | Q3 | Path i

Imaginary signal position | Q2 | Q4 | Path j

a

UE 2

Real signal position | Q5 | Q7 | Path i

Imaginary signal position | Q6 | Q9 | Q8 | Path j

b

FIG. 18

```
┌───────────────┐              ┌─────────────────┐
│ First terminal │              │ Network device  │
└───────┬───────┘              └────────┬────────┘
        │                               │
        │     S1901: First pilot pattern │
        │◄───────────────────────────────
        │                               │
        │     S1902: First signal        │
        ───────────────────────────────►│
        │                               │
```

FIG. 19

UE 1

Real signal position   | Q1 | Q3 |   Path i

Imaginary signal position   | Q2 | Q4 |   Path j

a

UE 2

Real signal position   | Q10 | Q12 |   Path i

Imaginary signal position   | Q11 | Q13 |   Path j

b

FIG. 20

```
┌───────────────┐              ┌─────────────────┐
│   Terminal    │              │ Network device  │
└───────┬───────┘              └────────┬────────┘
        │                               │
        │     S2101: First information   │
        │◄───────────────────────────────
        │                               │
        │  S2102: Signal corresponding   │
        │  to a first pilot pattern or a │
        │     second pilot pattern       │
        ───────────────────────────────►│
        │                               │
```

FIG. 21

Signal transmission apparatus
2200

2201

Receiving
module

Sending
module

2202

FIG. 22

Signal transmission apparatus 2300

2301

Processor

CPU 0

CPU 1

2302

Memory

2303

Transceiver

FIG. 23

Signal transmission apparatus
2400

2401

Logic
circuit

Input/
Output
interface

2402

FIG. 24

## INTERNATIONAL SEARCH REPORT

| | International application No. |
|---|---|
| | **PCT/CN2022/107961** |

| A. | CLASSIFICATION OF SUBJECT MATTER |
|---|---|
| | H04L 27/26(2006.01)i |

According to International Patent Classification (IPC) or to both national classification and IPC

| B. | FIELDS SEARCHED |
|---|---|

Minimum documentation searched (classification system followed by classification symbols)

    H04L

Documentation searched other than minimum documentation to the extent that such documents are included in the fields searched

Electronic data base consulted during the international search (name of data base and, where practicable, search terms used)

    CNABS; CNTXT; VEN; USTXT; WOTXT; EPTXT; CNKI; 3GPP: 导频, 信号, 图案, 图样, 位置, 资源, 时域, 间隔, 预编码, 序列, 多用户相位噪声, 相噪补偿, 干扰, UE, PHN, PAPR, RS, reference, signal, pilot, pattern, resource, time-domain, location, TTI, sequence, interfere

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112600658 A (OPPO GUANGDONG MOBILE TELECOMMUNICATIONS CO., LTD.) 02 April 2021 (2021-04-02) description, paragraphs [0004]-[0305] | 1-32 |
| A | CN 112929144 A (OPPO GUANGDONG MOBILE TELECOMMUNICATIONS CO., LTD.) 08 June 2021 (2021-06-08) entire document | 1-32 |
| A | CN 108111270 A (ZTE CORP.) 01 June 2018 (2018-06-01) entire document | 1-32 |
| A | WO 2018137223 A1 (HUAWEI TECHNOGOLY CO., LTD.) 02 August 2018 (2018-08-02) entire document | 1-32 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2022** | **17 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107961**

| Patent document cited in search report | | | Publication date (day/month/year) | Patent family member(s) | | | Publication date (day/month/year) |
|---|---|---|---|---|---|---|---|
| CN | 112600658 | A | 02 April 2021 | None | | | |
| CN | 112929144 | A | 08 June 2021 | None | | | |
| CN | 108111270 | A | 01 June 2018 | None | | | |
| WO | 2018137223 | A1 | 02 August 2018 | CN | 110169172 | A | 23 August 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110876823
- CN 202111179100